(19) **Europäisches Patentamt European Patent Office Office européen des brevets**

(11) **EP 1 693 423 B1**

(12) **EUROPEAN PATENT SPECIFICATION**

(45) Date of publication and mention of the grant of the patent:
**05.12.2012 Bulletin 2012/49**

(51) Int Cl.:
*C09B 67/10* (2006.01)     *C09B 67/08* (2006.01)
*C09B 67/20* (2006.01)     *C09D 11/00* (2006.01)

(21) Application number: **06000710.1**

(22) Date of filing: **13.01.2006**

(54) **Organic pigment fine-particle, and method of producing the same**

Feine organische Pigmentpartikel und Verfahren zu deren Herstellung

Fines particules de pigment organique et méthode pour les préparer

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.01.2005   JP 2005007900**
**14.01.2005   JP 2005007914**
**14.01.2005   JP 2005007929**
**14.01.2005   JP 2005007938**

(43) Date of publication of application:
**23.08.2006   Bulletin 2006/34**

(73) Proprietor: **FUJIFILM Corporation**
**Minato-ku**
**Tokyo (JP)**

(72) Inventors:
• **Maeta, Hideki**
**Minami-ashigara-shi**
**Kanagawa-ken (JP)**
• **Shimizu, Yuki**
**Minami-ashigara-shi**
**Kanagawa-ken (JP)**
• **Sato, Tadahisa**
**Minami-ashigara-shi**
**Kanagawa-ken (JP)**

(74) Representative: **HOFFMANN EITLE**
**Patent- und Rechtsanwälte**
**Arabellastrasse 4**
**81925 München (DE)**

(56) References cited:
**EP-A- 1 195 413        EP-A- 1 516 896**
**WO-A-2004/037929   FR-A- 1 335 215**
**JP-A- 2003 026 972   US-A1- 2003 158 410**

• **PENTH B: "NEW NON - CLOGGING MICROREACTOR FOR CHEMICAL PROCESSING AND NANO MATERIALS" PROCEEDINGS. MICRO. TEC. VDE WORLD MICROTECHNOLOGIES CONGRESS, PROCEEDINGS OF INTERNATIONAL CONFERENCE ON MICROTECHNOLOGIES, XX, XX, vol. 1, 1 January 2000 (2000-01-01), pages 401-405, XP001058349**
• **O.WÖRZ: "Wozu Mikroreaktoren?" CHEM.I.U.ZEIT, vol. 34, no. 1, 2000, pages 24-29, XP002558956**

**Description**

The present invention relates to a method of varying particle size when producing fine-particles of an organic pigment.

More specifically, the present invention relates to a method of varying particle size when producing organic pigment fine-particles, in which the hydrogen ion exponent (pH) of an organic pigment solution flowing in a laminar flow state in a channel is changed, and in which the molecular weight of a polymer dispersing agent to be contained in the flowing solution is also changed.

The present invention also relates to a method of varying particle size when producing organic pigment fine-particles, in which the hydrogen ion exponent (pH) of an organic pigment solution flowing in a laminar flow state in a channel is changed, and in which the addition amount of a dispersing agent to be contained in the flowing solution is also changed.

The present invention also relates to a method of varying particle size when producing organic pigment fine-particles, in which the hydrogen ion exponent (pH) of an organic pigment solution flowing in a laminar flow state in a channel is changed, and in which the temperature during the flowing under contact with an aqueous medium is also changed.

BACKGROUND OF THE INVENTION

Pigments generally exhibit vivid color tone and high coloring power, and they are widely used in many fields. Examples of use applications in which pigments are used include paints, printing inks, electrophotographic toners, ink-jet inks, and color filters. Pigments are important compounds indispensable in everyday life at the present time. General properties, classification by use, and other aspects of pigments are described in, for example, "Dispersion Stabilization of Pigment and Surface Treatment Technique/Evaluation", Technical Information Institute Co., Ltd., 2001, pp. 123-224. In connection with the above-mentioned use applications, examples of pigments that must provide high performance, and that are of particular importance in practical use, are ink-jet ink pigments, and color filter pigments.

As the coloring material for ink-jet ink, dyes have been used, but they have drawbacks as to water resistance and light resistance. To overcome the drawbacks, pigments have come to be used. Images obtained from pigment inks have remarkable advantages of superior light resistance and water resistance compared with images obtained from dye-based inks. However, the former images have the problems that the pigment is not easily formed uniformly or pulverized into fine-particles of a nanometer size (i.e., monodispersion), which can permeate pores in the surface of paper, and then the pigment in the image are poor in close bindness to the paper.

With an increase in the number of pixels in digital cameras, there is a need for a color filter used in a CCD sensor to be made thinner. In the color filter, an organic pigment is used. Since the thickness of the filter depends largely on the particle diameter of the organic pigment, there has been a need to produce monodisperse and stable fine-particles of a nanometer-size level.

In general, the methods to produce fine particles are roughly classified into the breakdown method, in which fine particles are produced from a bulk material by pulverization or the like, and the build-up method, in which fine particles are produced by particle-growth from a gas phase or liquid phase, as described, for example, in "Experimental Chemical Lecture, 4th Edition," edited by the Chemical Society of Japan (Maruzen Co., Ltd.), vol. 12, pp. 411-488, 1993. The pulverizing method, which has been widely used hitherto, is a fine-particle-producing method having high practicability, but it has various problems, such as that its productivity is very low in producing organic material particles of nanometer size, and that the materials to which the method can be applied are limited. In recent years, investigations have been made to produce organic material fine-particles of nanometer size by the build-up method.

One of the methods recently disclosed is to use a supercritical fluid or subcritical fluid to make azo pigments, which are organic pigments, into fine particles (for example, JP-A-2002-138216 ("JP-A" means unexamined published Japanese patent application)). That is, this method is one dissolving the pigment into a supercritical fluid or subcritical fluid, and then returning the solution to a condition of ambient temperature and normal pressure, to grow crystals, thereby producing fine particles. Performance of this method causes such problems: First, it requires an apparatus that can realize very high temperature and pressure, close to supercritical temperature and pressure; and second, the organic compounds generally decompose easily under such conditions.

A second method of the above-mentioned methods uses a microjet reactor: a micro-chemical process technique that will be described later, to produce fine particles (for example, JP-A-2002-146222, JP-A-2002-155221, and JP-A-2002-161218). This is a method of introducing a solution, in which a pigment is dissolved, and a precipitation medium solution, into two nozzles that are opposite to each other and that have different micrometer sizes, at high pressure (for example, 5 MPa) by means of a pump; and introducing a gas (such as compressed air) perpendicularly into a portion where the jet flows of the two solutions collide with each other, so as to discharge a suspension of the pigment by the gas flow (flow rate, about 0.5 m³/h). The methods described in JP-A-2002-146222 and JP-A-2002-161218, which are examples of this method, correspond to a breakdown method in which pigment suspensions are caused to collide with each other in a chamber, thereby making the pigment particles finer. On the other hand, the method described in JP-A-2002-155221 is to spray a solution of a pigment and a precipitation medium into a chamber, to precipitate the pigment, thereby producing fine particles, which method can be regarded as a build-up method. This method adopts the following contrivance: Particles are generated in a very small space, of a micrometer scale, and the particles are immediately taken out from the apparatus, thereby preventing the apparatus from being blocked by the pigment fine-particles. Thus, this method is preferred to obtain fine particles having a narrow particle diameter distribution. However, the method has such problems as that the contact time for the two solutions is not easily controlled, and thus subtle reaction control is difficult.

A third method is to bring a solution, in which an organic pigment is dissolved, gradually into contact with an aqueous medium, to precipitate the pigment (a so-called co-precipitation method (reprecipitation method)), in which a dispersing agent is incorporated into either of the solutions, thereby producing stable, fine particles (JP-A-2003-26972). This method enables producing particles of a nanometer size easily. However, when the system is scaled up, the sizes of the particles are scattered, and needle particles are apt to generate. Therefore, even if the generated particles are observed as singe-nanometer particles in a particle-measuring apparatus, observation of the particle shape thereof with a transmission electron microscope shows the particles to be considerably long needle particles. Thus, the particles are unsuitable for fine particles for ink-jet ink, which are preferably spherical.

A known method of producing organic pigment fine-particles includes injecting, into a poor solvent, a solution of an organic pigment in an amide-type solvent, under stirring (JP-A-2004-91560). In this method, however, the contact with the solvent is performed under stirring in turbulent flow, and thus this method has problems with the resulting particle sizes and monodispersity. This method is also less versatile because of the limitation to the amide-type solvent, and the like.

A known method, positioned between the build-up method and the breakdown method, is a conditioning method, in which coarse particles are heat-treated to adjust the particle diameter thereof. In a method recently disclosed, an organic pigment is conditioned in a micro-reactor, using an idea of the micro-chemical process technique, which will be described later (JP-A-2002-30230). JP-A-2002-30230 describes that a suspension of a liquid pigment precursor (a suspension in which a pigment having a broad particle size distribution is suspended in a solution) is continuously introduced into a micro-reactor and heat-treated, thereby the pigment crystalline fine-particles in the suspension undergo phase-change; and at the same time to the phase-change, particles having an average particle diameter larger than that of the precursor, and having a narrow particle size distribution, can be produced. This method advantageously produces particles having a narrow particle diameter distribution, but it has the drawback that particles favorably having a small particle diameter, among the precursor particles, are also made larger.

In recent years, attention has been paid to a technique in which a reaction channel, having a microscopic channel sectional area, is used to conduct chemical reaction; that is, the so-called "micro-chemical process technique," since chemical reaction can be effectively conducted. The "micro-chemical process technique" is substance-producing technique and chemical analysis technique using a chemical and/or physical phenomenon that is caused in a micro-channel, which is formed on a solid substrate by micromachining technique and the like, and which has a width of several micrometers to several hundred micrometers.

A general method of producing a disazo condensed-type pigment is described, for example, by W. Herbst and K. Hunger, in "Industrial Organic Pigments, Production, Properties, Applications, - Second Completely Revised Edition," VCH A Wiley Company, 1997, pp. 595-630. On the other hand, as a method of producing a pigment in a micro-reactor based on a micro-chemical process technique, a method of producing a disazo condensed-type pigment or a diketopyrrolopyrrole-series pigment is disclosed in, for example, JP-A-2002-38043 and JP-A-2002-12788. These can be regarded as one type of a build-up method. In the description of 7P-A-2002-38043, the step up to the synthesis of the disazo-type pigment is conducted in a micro-reactor. However, the starting compound itself has low solubility, and therefore the compound is introduced as a suspension, into the micro-reactor. This may be highly apt to cause blockage of the channel if conditions to be controlled are incorrect. Thus, it is unavoidable to say that there is difficulty from the viewpoints of reproducibility and continuous production.

EP-A-1 516 896, which is prior art under Article 54(3) EPC, concerns a method of forming fine particles of organic pigment comprising flowing a solution of the organic pigment through a channel and changing the pH in the course of the channel.

SUMMARY OF THE INVENTION

The present invention resides in a method of varying the particle size of fine-particles of an organic pigment produced when an aqueous medium in which an organic pigment is dissolved and which contains at least one dispersing agent, and a solution for adjusting the pH of the aqueous organic pigment solution, flow and contact each other in a laminar flow state in a channel (flow passage), wherein the pH of the aqueous organic pigment solution is changed in the channel flow, comprising: varying at least one of (b1) the molecular weight of a polymer dispersing agent comprised in the aqueous organic pigment solution, (c1) the content of the dispersing agent and (d1) the temperature in order to vary the particle size obtained.

Further, the present invention resides in a method of varying the particle size of fine-particles of an organic pigment produced when an organic pigment solution and an aqueous medium, at least one of which containing a dispersing agent, flow and contact each other in a channel having an equivalent diameter of 1 mm or less, comprising: varying during the contacting and flowing at least one of (b2) the molecular weight of a polymer dispersing agent to be contained in at least one of the organic pigment solution and the aqueous medium, (c2) the content of the dispersing agent and (d2) the temperature.

Other and further objects, features and advantages of the invention will appear more fully from the following description, taken in connection with the accompanying drawings.

BRIEF DESCRIPTION OF THE DRAWINGS

In the accompanying drawings:

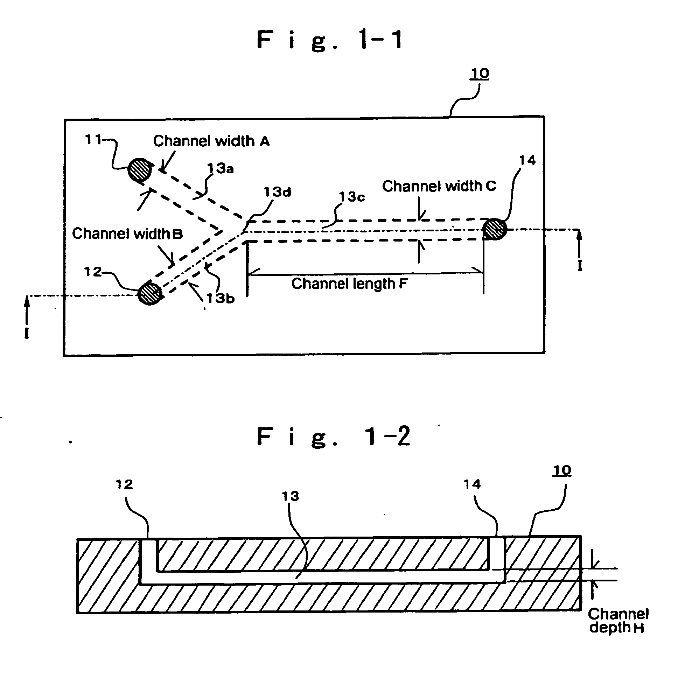

Fig. 1-1 is an explanatory view of a reactor having on one side thereof a Y-shaped channel.

Fig. 1-2 is a sectional view taken on line I-I of Fig. 1-1.

Fig. 2-1 is an explanatory view of a reactor having a cylindrical tube-type channel in which a channel is provided to insert at one side thereof.

Fig. 2-2 is a sectional view taken on line IIa-IIa of Fig. 2-1.

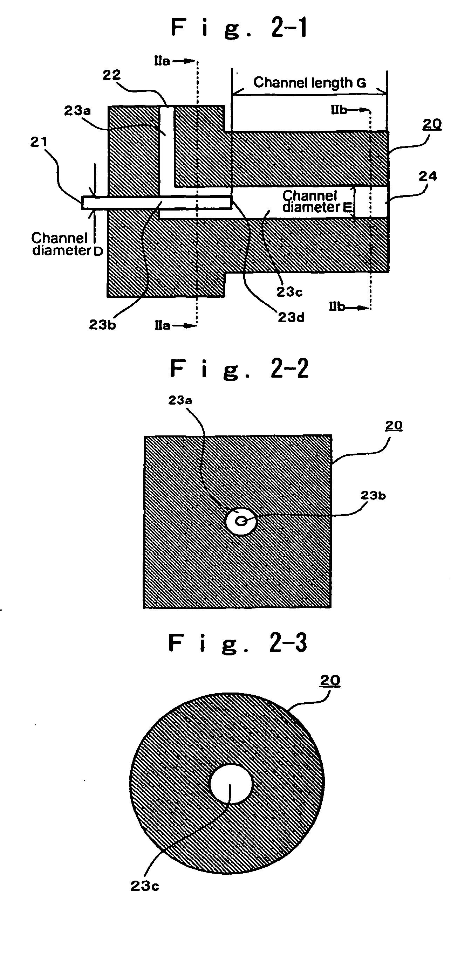

Fig. 2-3 is a sectional view taken on line IIb-IIb of Fig. 2-1.

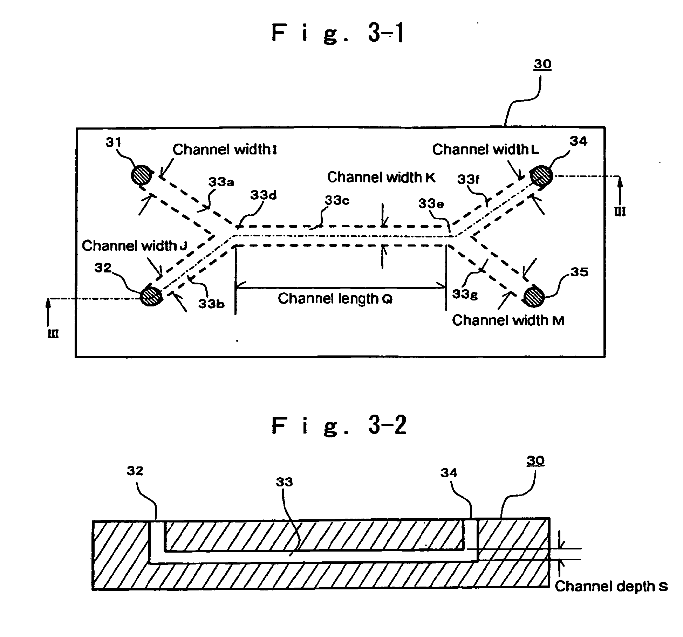

Fig. 3-1 is an explanatory view of a reactor having on both sides thereof Y-shaped channels.

Fig. 3-2 is a sectional view taken on line III-III of Fig. 3-1.

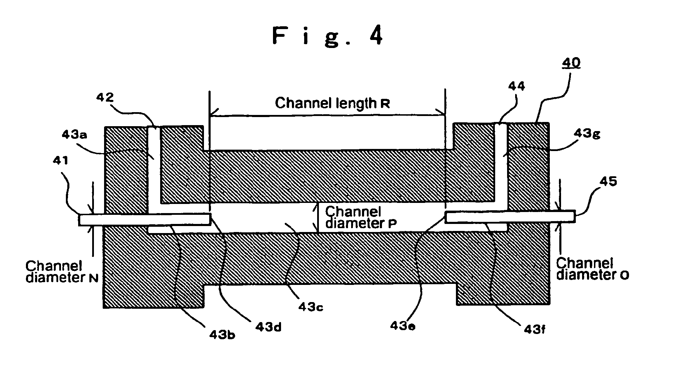

Fig. 4 is an explanatory view of a reactor having a cylindrical tube-type channel in which channels are provided to insert at both sides thereof.

DETAILED DESCRIPTION OF THE INVENTION

According to the present invention, there is provided the following means:

(1) A method of varying the particle size of fine-particles of an organic pigment produced when an aqueous medium in which an organic pigment is dissolved and which contains at least one dispersing agent, and a solution for adjusting the pH of the aqueous organic pigment solution, flow and contact each other in a laminar flow state in a channel (flow passage), wherein the pH of the aqueous organic pigment solution is changed in the channel flow, comprising: varying at least one of (b1) the molecular weight of a polymer dispersing agent comprised in the aqueous organic pigment solution, (c1) the content of the dispersing agent and (d1) the temperature in order to vary the particle size obtained.

(2) A method of varying the particle size of fine-particles of an organic pigment produced when an organic pigment solution and an aqueous medium, at least one of which containing a dispersing agent, flow and contact each other in a channel having an equivalent diameter of 1 mm or less, comprising: varying during the contacting and flowing at least one of (b2) the molecular weight of a polymer dispersing agent to be contained in at least one of the organic pigment solution and the aqueous medium, (c2) the content of the dispersing agent and (d2) the temperature.

(3) A method according to item 1, comprising varying the molecular weight of the polymer dispersing agent to be contained in the organic pigment solution in order to vary the particle size of said fine-particles of organic pigment.

(4) A method according to item 2, comprising varying the molecular weight of the polymer dispersing agent in order to vary the particle size of said fine-particles of organic pigment.

(5) A method according to item 1, comprising varying the content of the dispersing agent in order to vary the particle size of said fine-particles of organic pigment.

(6) A method according to item 2, comprising varying the content of the dispersing agent in order to vary the particle size of said fine-particles of organic pigment.

(7) A method according to item 6, wherein the dispersing agent is a polymer dispersing agent.

(8) A method according to item 1, comprising varying the temperature during the contacting and flowing in order to vary the particle size of said fine-particles of organic pigment.

(9) A method according to any of items 3, 5 and 8, wherein the solution of the organic pigment is alkaline.

(10) A method according to any of items 3, 5, 8 and 9, wherein the aqueous solution in which the organic pigment is dissolved in a homogeneous mixed solvent of water and an organic solvent.

(11) A method according to any of items 3, 5 and 8-10, wherein the equivalent diameter of the channel is 1 mm or less.

(12) A method according to any of items 5 and 8-11, wherein at least one of the dispersing agents is a polymer dispersing agent.

(13) A method according to any of items 3, 5 and 8-12, wherein the channel of the laminar flow is a micro-reaction site.

(14) A method according to item 2, comprising varying the temperature during the contacting and flowing in order to vary the particle size of said fine-particles of organic pigment.

(15) A method according to any of items 4, 6, 7 or 14, wherein the solution of the organic pigment is alkaline.

(16) A method according to item 14 or item 15, wherein the temperature during the contacting and flowing is controlled in any one step or in a plurality of steps of the reaction.

(17) A method according to item 1, wherein the particle size is decreased by increasing the molecular weight of the dispersant within the range of 1,000 to 2,000,000.

(18) A method according to item 1, wherein the particle size is decreased by increasing the mass of dispersant in the organic pigment solution within the range of 0.1 to 1,000 parts by mass based upon 100 parts by mass of organic pigment.

(19) A method according to item 1, wherein the particle size is decreased by decreasing the temperature at which the solutions are contacted with the range of -20 °C to 90 °C.

Herein, the present invention means to include all of the embodiments, unless otherwise specified.

Further, in the present specification, the term "changing the molecular weight of a polymer dispersing agent" means to set an appropriate molecular weight of said polymer dispersing agent so as to obtain fine-particles of a desired particle diameter.

Further, in the present specification, the term "controlling the content of the dispersing agent" means to set an appropriate content of the dispersing agent so as to obtain fine-particles of a desired particle diameter.

As a method of producing fine-particles of an organic pigment, there is a method in which solutions are stirred or mixed in a flask or tank (batch type methods). In such a method, however, the size of the resulting particles can hardly be changed even by changing the mixing ratio of the solutions or the like, and thus the control range would be limited.

According to the method of the present invention, particularly a second embodiment of the present invention, the organic pigment solution is allowed to flow in a channel, and the molecular weight of a polymer dispersing agent in flowing solutions is changed, so that the size of the obtained particles can be controlled in a wide range and that the monodispersity of the particles can be improved.

According to the method of the present invention, particularly a third embodiment of the present invention, the organic pigment solution is allowed to flow in a channel, and the content of a polymer dispersing agent in flowing solutions is changed, so that the size of the obtained particles can be controlled in a wide range and that the monodispersity of the particles can be improved.

According to the method of the present invention, particularly a forth embodiment of the present invention, the organic pigment solution is allowed to flow in a channel and the temperature during the contacting and flowing of flowing solutions is changed, so that the size of the obtained particles can be controlled in a wide range and that the monodispersity of the particles can be improved.

The present invention is described in detail hereinafter.

The channel that can be used in the production method of the present invention preferably has an equivalent diameter that can cause a laminar flow.

The equivalent diameter in the present invention is a term also called a corresponding diameter, which is used in mechanical engineering field. If a cylindrical pipe equivalent to the pipe (channel in the present invention) having any sectional shape is assumed, the diameter of the equivalent cylindrical pipe corresponds to the equivalent diameter. The equivalent diameter ($d_{eq}$) is defined as $d_{eq}=4A/p$ in which A is a sectional area of the pipe, and p is a wetted perimeter length (circumferential length) of the pipe. In the case of the cylindrical pipe, this equivalent diameter corresponds to the diameter of the cylindrical pipe. The equivalent diameter is used for presuming fluidity or heat conducting characteristic of the pipe on the basis of data of the equivalent cylindrical pipe, and expresses a spatial scale (a representative length) of a phenomenon. The equivalent diameter is: $d_{eq}=4a^2/4a=a$ in a squared pipe having a side (a); $d_{eq}=a/\sqrt{3}$ in an equilateral triangular pipe having a side (a); and $d_{eq}=2h$ in a flow between paralleled plates having a channel height (h) (see, for example, edited by Nippon Kikai Gakkai, "Kikai Kougaku Jiten," 1997, published by Maruzen, K. K.).

When causing water to flow into a pipe, inserting a narrow pipe into the pipe along the central axis thereof and then injecting a colored solution into the water, the colored solution flows in the form of a single line while the flow velocity of the water is small or slow. Thus, the water flows straightly and in parallel to the wall of the pipe. However, when the flow velocity is raised to reach a given flow velocity, turbulence is suddenly caused in the water flow. Consequently, the colored solution is mixed with the water flow so that the whole of the solution and water becomes a colored flow. The former flow is called laminar flow, and the latter flow is called turbulent flow.

Whether a flow turns to a laminar flow or turbulent flow depends on whether or not the Reynolds number, which is a dimensionless number showing the state of the flow, is not more than a given critical value. As the Reynolds number is smaller, a laminar flow is more apt to be caused. The Reynolds number Re of the flow in a pipe is represented by the following equation:

$$\mathbf{Re = D<v_x>\rho/\mu}$$

wherein D represents the equivalent diameter of the pipe, $<v_x>$ represents the sectional average velocity, p represents the density of the flow, and $\mu$ represents the viscosity of the flow. As can be understood from this equation, the Reynolds number is smaller as the equivalent diameter is smaller. Therefore, in the case that the equivalent diameter is in the order of $\mu$m, a stable laminar flow is apt to be formed. In addition, because the physical properties of the solution, such as the density and the viscosity thereof, also have influence on the Reynolds number. As the density is smaller and/or the viscosity is larger, the Reynolds number is smaller. It can be, therefore, understood that a laminar flow is apt to be formed in that case.

The Reynolds number representing such a critical value is called "critical Reynolds number". The critical Reynolds number is not necessarily definite. However, roughly, the following values are criteria:

Re<2,300            laminar flow;
Re>3,000            turbulent flow; and
3,000≥Re≥2,300    transition state.

As the equivalent diameter of a channel is smaller, the surface area per unit volume (specific surface area) thereof is larger. When the channel turns into a micro-scale, the specific surface area becomes remarkably large so that the conduction efficiency of heat through the wall of the channel becomes very high. Since the heat conduction time (t) of a fluid flowing in the channel is represented by: $t=d_{eq}^2/\alpha$ (in which $\alpha$ is the heat diffusion rate of the fluid), the heat conduction time becomes shorter as the equivalent diameter becomes smaller. That is, if the equivalent diameter becomes 1/10, the heat conduction time becomes 1/100. Thus, when the equivalent diameter is in a micro-scale, the heat conduction speed is very high.

Precisely, in a micro-size space where the equivalent diameter is in micro scale, flow has a small Reynolds number, and thus, a flow reaction can be conducted with the stable laminar flow being preferential. In addition, the interface between laminar flows has a very large interface surface area. This enables high-speed and precise mixing of component molecules owing to molecular diffusion between laminar flows, with keeping laminar flows. Further, use can be made of a channel wall having a large surface area, which enables precise temperature control; and controlling the flow rate in flow reaction enables precise control of reaction time. Therefore, among the channels where the laminar flow can be formed according to the present invention, a channel of micro scale that has an equivalent diameter with which the reaction can be highly controlled is defined as a micro reaction site.

As shown in the above explanation of Reynolds number, formation of laminar flow is largely influenced not only by the size of equivalent diameter of the channel but also by flowing conditions that include solution physical properties such as viscosity and density. Therefore, in the present invention, the equivalent diameter of the channel is not particularly limited as long as a laminar flow is formed in the channel. The equivalent diameter is preferably of a size with which a laminar flow easily forms. The equivalent diameter of the channel is 1 mm or less since a micro reaction site can be formed. The equivalent diameter is further preferably 10 $\mu$m to 1 mm, and particularly preferably 20 to 300 $\mu$m.

A typical example of the reaction apparatus (reactor) having such a micro-scale size flow path (channel), which can be preferably used in the producing method of the present invention, is commonly called "microreactor" and is being developed greatly in recent years (see, for example, W. Ehrfeld, V Hessel, and H. Loewe, "Microreactor," 1Ed. (2000) Wiley-VCH).

The above-mentioned general micro-reactor is provided with plural micro-channels each having an equivalent diameter (obtained by converting the section thereof to a corresponding circle) of several micrometers to several hundred micrometers; and a mixing space connected to these micro-channels. In the micro-reactor, plural solutions are introduced through the plural micro-channels into the mixing space, thereby mixing the solutions, or mixing the solutions and simultaneously causing chemical reaction.

Next, the following describes major different points of reaction by use of the micro-reactor from reaction based on a batch type by use of a tank or the like. In chemical reaction of a liquid phase and chemical reaction in two liquid phases, molecules generally encounter each other on the interface between the reaction solutions, to cause the reaction. Therefore, when the reaction is conducted in a microscopic space (micro-channel), the area of the interface becomes large in relation to the space so that the efficiency of the reaction increases remarkably. In addition, about the diffusion of molecules, the diffusion time is in proportion with the square of diffusion distance. This fact means that as the scale is made smaller, the mixing of the reaction solutions advances more by the diffusion of the molecules, so as to cause the reaction more easily even if the reaction solutions are not actively mixed. Further, in the microscopic space, flows have small Reynolds numbers (dimensionless number by which the flow is characterized), the flows tend to turn preferentially to laminar flows. Therefore, the molecules existent in the solutions are exchanged from one laminar flow to another laminar flow on the interface where the solutions are in the states of laminar flows, and the transferred molecules cause precipitation or reaction.

When a micro-reactor, which has characteristics as described above, is used, the reaction time and temperature between the solutions therein can be more precisely controlled, compared with a conventional batch system, in which, for example, a tank having a large volume is used as a reaction site. Further, in the batch system, in particular, between solutions having a large reaction speed, sometimes reaction advances on a reaction contact face generated at the initial stage of mixing the solutions, and further a primary product generated by the reaction between the solutions subsequently undergoes reaction in the container. Therefore, there may be a possibility that the resultant product becomes nonhomogeneous or crystals of the product grow beyond necessity in the mixing container (batch) to get coarse. Contrary to the above, according to a micro-reactor that can be used in the present invention, solutions hardly remain in the mixing space (e.g. a mixing container) so as to flow continuously. Consequently, it is possible to restrain a primary product generated by the reaction between the solutions from undergoing subsequent reaction while the primary product remains in the mixing space. Thus, a pure primary product, which has been hardly taken out hitherto, can be taken out. Moreover, it becomes difficult that crystals aggregate in the mixing space or get coarse.

Further, when a chemical substance that can be produced in only a small amount by use of an experimental producing-apparatus, is tried to produce in a large amount by use of large-scale manufacturing facilities (i.e. scaling up), huge labor and very long period of time have been required hitherto, to gain the reproducibility of the manufacture in large-scale manufacturing facilities of a batch system as similar as the reproducibility of the production in the experimental producing-apparatus. However, by arranging a plurality of producing lines each using a micro-reactor in parallel (numbering-up) according to a necessary production quantity, labor and time period for gaining such the reproducibility may be largely reduced.

Preferable examples of the method for forming the channel that can be used in the present invention will be explained. It is relatively easy to form a channel with an equivalent diameter of 1 mm or more with generally known machine processing techniques, but it is exceptionally difficult to form a channel with a size of 1 mm or less (micro size), especially with a size of 500 $\mu$m or less. A micro-size channel (micro-channel) is formed on a solid substrate by micro processing technique in many cases. The material of the substrate may be any stable material that is not apt to be corroded. Examples of the material include metal (e.g. stainless steel, hastelloy (Ni-Fe based alloy), nickel, aluminum, silver, gold, platinum, tantalum, and titanium), glass, plastics, silicone, Teflon (registered trademark), and ceramics.

Representative examples of the micro processing technique for producing the micro-channel include a LIGA (Roentgen-Lithographie Galvanik Abformung) method using X-ray lithography, a high aspect ratio photolithography method using EPON SU-8 (trade name), a micro discharge processing method ($\mu$-EDM (Micro Electro Discharge Machining)), a high aspect ratio processing method for silicon by Deep RIE (Reactive Ion Etching), a hot emboss processing method, a photo-fabrication method, a laser processing method, an ion beam processing method, and a mechanical micro cutting processing method using a micro tool made of such a hard material as diamond. These techniques may be used alone or in combination. Preferable micro processing techniques are the LIGA method using X-ray lithography, the high-aspect ratio photolithography method using EPON SU-8, the micro discharge processing method ($\mu$-EDM), and the mechanical micro cutting processing method. In recent years, investigations have been made for applying a micro-injection molding technique to engineering plastics.

When the micro channel is assembled, a joining technique is often used. A normal joining technique is roughly divided into solid-phase joining and liquid-phase joining. In joining methods generally used, a typical joining method includes pressure welding and diffusion bonding as the solid-phase joining; and welding, eutectic bonding, soldering, and gluing as the liquid joining. Further, at the time of assembling, it is desirable to use a highly precise joining method in which dimension accuracy is maintained in such a way that deterioration of material due to high temperature heating, or destruction of a micro-structure such as a flow passage by a large deformation of material does not take place. Such a technique includes a silicon direct joining, anode joining, surface activation joining, direct joining using hydrogen bond, joining using aqueous HF solution, Au-Si eutectic bonding, and void-free bonding.

The micro-channels that can be used in the producing method of the present invention are not limited to channels formed on a solid substrate by use of the micro processing technique, and may be, for example, various available fused silica capillary tubes each having an inner diameter of several micrometers to several hundred micrometers. Various silicon tubes, fluorine-containing resin tubes, stainless steel pipes, and PEEK (polyetheretherketone) pipes each having an inner diameter of several micrometers to several hundred micrometers, which are commercially available as parts for high-performance liquid chromatography or gas chromatography, can also be used.

Hitherto, with respect to micro-reactors, devices that are aimed to improve reaction efficiency and the like, have been reported. For example, JP-A-2003-210960, JP-A-2003-210963 and JP-A-2003-210959 are concerned with micro-mixers. In the present invention, these micro-devices may also be used.

The micro-channel that can be used in the present invention may be subjected to a surface treatment according to an object. In particular, when handling an aqueous solution, since the adsorption of a sample to glass or silicon may become a problem, the surface treatment is important. In the fluid control in the micro-sized flow passage, it is desirable to realize this without incorporating a movable part requiring a complicated manufacturing process. For example, a hydrophilic region and a hydrophobic region are prepared in the channel by the surface treatment, so that it becomes possible to treat a fluid by using a difference in surface tension exerting on the boundary between these regions. The method used for surface-treating glass or silicon in many cases is hydrophobic or hydrophilic surface-treatment by using a silane coupling agent.

In order to introduce a reagent, sample, or the like into the channels and mix, a fluid control function is needed. Specifically, since the behavior of the fluid in the micro channel has properties different from those of a macro-scale, a control method appropriate for the micro-scale should be considered. A fluid control method is classified into a continuous flow system and a droplet (liquid plug) system according to the formation, while it is also classified into an electric driving system and a pressure driving system according to the driving force.

A more detailed description of these systems will be given hereinafter. The most widely used system as a formation for treating a fluid is the continuous flow system. When the flow is controlled in the continuous flow system, generally, the entire portion inside the micro-channel is filled with a fluid, and the fluid as a whole is driven by a pressure source such as a syringe pump that is provided outside the channel. In this method, although there is such a difficulty that dead volume is large, and the like, the continuous flow system has such a great merit that the control system can be realized with a relatively simple set-up.

As a system which is different from the continuous flow system, there is provided the droplet (liquid plug) system. In this system, droplets partitioned by air are made to move inside the reactor or inside the channel leading to the reactor, and each of the droplets is driven by air pressure. During this process, a vent structure for allowing air between droplets and channel walls, or air between the droplets as necessary, to escape to the outside; a valve structure for maintaining pressure inside the branched channels independently from pressure at other portions; and the like, must be provided inside the reactor system. Further, a pressure control system comprising a pressure source or a switching valve must be provided outside the reactor system in order to move the droplets by controlling the pressure difference. Thus, in the droplet system, although the apparatus configuration and the structure of the reactor become rather complicated as stated above, a multi-stage operation is enabled, for example, plural droplets are individually operated and some reactions are sequentially performed, and the degree of freedom concerning the system configuration becomes high.

As the driving system for performing the fluid control, there are generally and widely used an electrical driving method in which a high voltage is applied between both ends of a flow passage (channel) to generate an electro-osmotic flow, thereby fluid is moved; and a pressure driving method in which a pressure is applied to a fluid from the outside of the passage using a pressure source to move the fluid. It has been known that both systems are different in that, for example, as the behavior of the fluid, the flow velocity profile in the cross-section of the flow passage becomes a flat distribution in the case of the electrical driving system, whereas it becomes a hyperbolic flow distribution in the pressure driving system, in which the flow velocity is high at the center of the flow passage and low at the wall surface part. Therefore, the electrical driving system is suitable for such an object that a movement is made while the shape of a sample plug or the like is kept. In the case where the electrical driving system is performed, since it is necessary that the inside of the flow passage is filled with the fluid, the form of the continuous flow system must be adopted. However, since the fluid can be treated by an electrical control, a comparatively complicated process is also realized, for example, a concentration gradient varying with time is formed by continuously changing the mixing ratio of two kinds of solutions. In the case of the pressure driving system, the control can be made irrespective of electrical properties of the fluid, and secondary effects such as heat generation or electrolysis may not be considered, and therefore, an influence on the substrate (component) hardly exists, and its application range is wide. On the contrary, a pressure source must be prepared outside, and for example, response characteristics to manipulation are changed according to the magnitude of a dead volume of a pressure system, and it is necessary to automate the complicated process.

In the producing method of the present invention, although a method to be used as a fluid control method is suitably selected according to its object, the pressure driving system of the continuous flow system is preferable.

The temperature control in the channel for use in the producing method of the present invention, particularly of the first, second and third embodiments of the present invention, may be performed by putting the whole device having a passage in a container in which the temperature is controlled; or forming a heater structure such as a metal resistance wire or polysilicon in the device, and performing a thermal cycle in such a manner that the heater structure is used when heating, and cooling is natural cooling. With respect to the sensing of temperature, when a metal resistance wire is used, it is preferable that the same resistance wire as the heater is additionally formed, and the temperature detection is performed on the basis of the change of the resistance value of the additional wire. When the polysilicon is used, it is preferable that a thermocouple is used to detect the temperature. Further, heating and cooling may be performed from the outside by bringing a Peltier element into contact with the channel. A suitable method is selected in accordance with the use, the material of the channel body, and the like.

The temperature control in the channel for use in the producing method of the present invention, particularly of the forth embodiment of the present invention, can be performed by putting the whole device having a passage or a part of the device (such as a part corresponding to a fluid confluence point), in a container in which the temperature is controlled. Alternatively, the temperature control may be performed by forming a heater structure such as a metal resistance wire or polysilicon in the device, and performing a thermal cycle in such a manner that the heater structure is used when heating, and cooling is natural cooling. Further, heating and cooling may be performed from the outside by bringing a Peltier element into contact with the channel. Further, before allowed to flow, the solutions may be heated or cooled to a specific temperature such that the temperature can be adjusted during the contacting and flowing. In such a case, the two liquids to be allowed to flow may have different temperatures. A suitable method can be chosen in accordance with the desired temperature, the material of the channel body, and the like. With respect to the sensing of temperature, when a metal resistance wire is used, it is preferable that the same resistance wire as the heater is additionally formed, and the temperature detection is performed on the basis of the change of the resistance value of the additional wire. When the polysilicon is used, it is preferable that a thermocouple is used to detect the temperature. The control and/or detection of the channel temperature may be performed at any one step or a plurality of steps in the course of reaction (in the present specification, "in the course of reaction" refers to the whole process from the introduction of the reaction solutions to the production of the dispersion through the flowing step.)

In the producing method of the present invention, the production of the pigment or the preparation of the pigment dispersion is performed while flowing in a channel(s), that is, by a continuous flowing method. Thus, the reaction time is controlled by a period of time during which the channel retains the flow (i.e. retention time). When the equivalent diameter is constant, the retention time is determined by the length of the channel and the induction speeds of the reaction solutions. Further, the length of the channel is not particularly limited, but it is preferably 1 mm or more but 10 m or less, more preferably 5 mm or more but 10 m or less, and particularly preferably 10 mm or more but 5 m or less.

The number of channels that can be used in the present invention may be any number appropriately provided with a reactor. The number of channels may be one. Alternately, many channels may be arranged in parallel (i.e. numbering-up) as needed, to increase a processing amount thereof.

Preferred examples of a reactor that can be used in the present invention are illustrated in Figs. 1-1 to 4. Needless to say, the present invention is not limited to these examples.

Fig. 1-1 is an explanatory view of a reactor (10) having a Y-shaped channel. Fig. 1-2 is a sectional view taken on I-I line of Fig. 1-1. The shape of the section perpendicular to the direction of the length of the channel is varied dependently on the micro processing technique to be used, and is a shape close to a trapezoid or a rectangle. When widths and depths (in particular, width C and depth H) of the Y-shaped channel are made into micro-sizes, solutions introduced from introducing ports 11 and 12 with pumps or the like are caused to flow via introducing channels 13a or 13b, respectively, and are brought into contact with each other at a fluid confluence points 13d to form stable laminar flows to flow through a reaction channel 13c. While the solutions flow as the laminar flows, a solute contained in a laminar flow is mixed or reacted with another solute contained in another laminar flow each other by molecular diffusion on the interface between the laminar flows. Solutes, which diffuse very slowly, may not be diffused or mixed between the laminar flows; and, in some cases, the solutes are not mixed until they reach a discharge port 14. In such a case that the two solutions to be introduced are easily mixed in a flask, the flow of the mixed solutions may become homogeneous flow in the discharge port if a channel length F is made long. However, when the channel length F is short, laminar flows are kept up to the discharge port. When the two solutions to be introduced are not mixed in a flask and are separated into phases, the two solutions naturally flow as laminar flows to reach the discharge port 14.

Fig. 2-1 is an explanatory view of a reactor (20) having a cylindrical pipe-type channel in which a channel is inserted at one side thereof. Fig. 2-2 is a sectional view of the reactor taken on line IIa-IIa of Fig. 2-1, and Fig. 2-3 is a sectional view of the reactor taken on line IIb-IIb of Fig. 2-1. The shape of the section perpendicular to the direction of the length of the channel is a circular shape or a shape close thereto. When the channel diameters (D and E) of the cylindrical pipes are micro-sizes, solutions introduced from introducing ports 21 and 22 with pumps or the like are caused to flow via introducing channels 23b or 23a, respectively, and are brought into contact with each other at a fluid confluence point 23d to form stable cylindrical laminar flows to flow through a reaction channel 23c. While the solutions flow as the cylindrical laminar flows, solutes contained in the separate laminar flows are mixed or reacted with each other by molecular diffusion on the interface between the laminar flows. This matter is the same as in the case of the reactor, as illustrated in Fig. 1-1. The apparatus having the cylindrical pipe-type channel has the following characteristics: that the apparatus can make the contact interface between the two solutions larger than the apparatus illustrated in Fig. 1-1; and since the contact interface has no portion to contact the wall face of the apparatus, it does not happen that crystal growth is caused from the contact portion with the wall face as in the case that a solid (crystal) is generated by reaction, thereby the apparatus gives only a low possibility that the channel is blocked.

Further, two or more cylindrical pipes may also be inserted in a multiple arrangement, to form a system for forming a multi-layered laminar flow. For example, a cylindrical pipe of a smaller diameter may be inserted into the introducing channel 23b so that a three-layer laminar flow can be produced.

Figs. 3-1 and 4 illustrate apparatuses obtained by improving the apparatuses illustrated in Figs. 1-1 and 2-1, respectively, in order that when flows of two solutions arrive at outlets in the state that the flows are laminar flows, the laminar flows can be separated. When these apparatuses are used, reaction and separation can be attained at the same time. It is also possible to avoid phenomena that the two solutions are finally mixed so that the reaction between the solutions advances excessively, and that generated crystals get coarse. In the case that products or crystals are selectively present in one of the solutions, the products or crystals can be obtained with a higher concentration than in the case that the two solutions are mixed. Further, by linking a plurality of the apparatuses to each other, there are such advantages that an extracting operation is effectively performed. In addition, the system of Fig. 4 may also be modified into a multi-cylindrical-pipe system for forming a multi-layered laminar flow as the system of Fig. 2-1.

It is preferable, in the producing method of the present invention, a solution in which an organic pigment is homogeneously dissolved in an alkaline or acidic aqueous medium, is caused to flow, as a laminar flow, through the channel as described above, and in the course of this step of laminar flowing, the hydrogen ion exponent (pH) of the solution is changed, thereby producing organic pigment fine-particles and a dispersion containing the fine-particles. This is described in detail hereinafter.

The organic pigment that can be used in the present invention is not limited in the color tone thereof, and it may be a magenta pigment, a yellow pigment, or a cyan pigment. Specifically, the organic pigment may be a magenta pigment, a yellow pigment or a cyan pigment of a perylene, perynone, quinacridone, quinacridonequinone, anthraquinone, anthanthrone, benzimidazolone, condensed disazo, disazo, azo, indanthrone, phthalocyanine, triaryl carbonium, dioxazine, aminoanthraquinone, diketopyrrolopyrrole, thioindigo, isoindoline, isoindolinone, pyranthrone or isoviolanthrone-series pigment, or a mixture thereof.

More specifically, examples of the organic pigment include perylene-series pigments, such as C.I. Pigment Red 190 (C.I. No. 71140), C.I. Pigment Red 224 (C.I. No. 71127), and C.I. Pigment Violet 29 (C.I. No. 71129); perynone-series pigments, such as C.I. Pigment Orange 43 (C.I. No. 71105), and C.I. Pigment Red 194 (C.I. No. 71100); quinacridone-series pigments, such as C.I. Pigment Violet 19 (C.I. No. 73900), C.I. Pigment Violet 42, C.I. Pigment Red 122 (C.I. No. 73915), C.I. Pigment Red 192, C.I. Pigment Red 202 (C.I. No. 73907), C.I. Pigment Red 207 (C.I. Nos. 73900 and 73906), and C.I. Pigment Red 209 (C.I. No. 73905); quinacridonequinone-series pigments, such as C.I. Pigment Red 206 (C.I. No. 73900/73920), C.I. Pigment Orange 48 (C.I. No. 73900/73920), and C.I. Pigment Orange 49 (C.I. No. 73900/73920); anthraquinone-series pigments, such as C.I. Pigment Yellow 147 (C.I. No. 60645); anthanthrone-series pigments, such as C.I. Pigment Red 168 (C.I. No. 59300); benzimidazolone-series pigments, such as C.I. Pigment Brown 25 (C.I. No. 12510), C.I. Pigment Violet 32 (C.I. No. 12517), C.I. Pigment Yellow 180 (C.I. No. 21290), C.I. Pigment Yellow 181 (C.I. No. 11777), C.I. Pigment Orange 62 (C.I. No. 11775), and C.I. Pigment Red 185 (C.I. No. 12516); condensed disazo-series pigments, such as C.I. Pigment Yellow 93 (C.I. No. 20710), C.I. Pigment Yellow 94 (C.I. No. 20038), C.I. Pigment Yellow 95 (C.I. No. 20034), C.I. Pigment Yellow 128 (C.I. No. 20037), C.I. Pigment Yellow 166 (C.I. No. 20035), C.I. Pigment Orange 34 (C.I. No. 21115), C.I. Pigment Orange 13 (C.I. No. 21110), C.I. Pigment Orange 31 (C.I. No. 20050), C.I. Pigment Red 144 (C.I. No. 20735), C.I. Pigment Red 166 (C.I. No. 20730), C.I. Pigment Red 220 (C.I. No. 20055), C.I. Pigment Red 221 (C.I. No. 20065), C.I. Pigment Red 242 (C.I. No. 20067), C.I. Pigment Red 248, C.I. Pigment Red 262, and C.I. Pigment Brown 23 (C.I. No. 20060); disazo-series pigments, such as C.I. Pigment Yellow 13 (C.I. No. 21100), C.I. Pigment Yellow 83 (C.I. No. 21108), and C.I. Pigment Yellow 188 (C.I. No. 21094); azo-series pigments, such as C.I. Pigment Red 187 (C.I. No. 12486), C.I. Pigment Red 170 (C.I. No. 12475), C.I. Pigment Yellow 74 (C.I. No. 11714), C.I. Pigment Red 48 (C.I. No. 15865), C.I. Pigment Red 53 (C.I. No. 15585), C.I. Pigment Orange 64 (C.I. No. 12760), and C.I. Pigment Red 247 (C.I. No. 15915); indanthrone-series pigments, such as C.I. Pigment Blue 60 (C.I. No. 69800); phthalocyanine-series pigments, such as C.I. Pigment Green 7 (C.I. No. 74260), C.I. Pigment Green 36 (C.I. No. 74265), Pigment Green 37 (C.I. No. 74255), Pigment Blue 16 (C.I. No. 74100), C.I. Pigment Blue 75 (C.I. No. 74160:2), and 15 (C.I. No. 74160); triaryl carbonium-series pigments, such as C.I. Pigment Blue 56 (C.I. No. 42800), and C.I. Pigment Blue 61 (C.I. No. 42765:1); dioxazine-series pigments, such as C.I. Pigment Violet 23 (C.I. No. 51319), and C.I. Pigment Violet 37 (C.I. No. 51345); aminoanthraquinone-series pigments, such as C.I. Pigment Red 177 (C.I. No. 65300); diketopyrrolopyrrole-series pigments, such as C.I. Pigment Red 254 (C.I. No. 56110), C.I. Pigment Red 255 (C.I. No. 561050), C.I. Pigment Red 264, C.I. Pigment Red 272 (C.I. No. 561150), C.I. Pigment Orange 71, and C.I. Pigment Orange 73; thioindigo-series pigments, such as C.I. Pigment Red 88 (C.I. No. 73312); isoindoline-series pigments, such as C.I. Pigment Yellow 139 (C.I. No. 56298), C.I. Pigment Orange 66 (C.I. No. 48210); isoindolinone-series pigments, such as C.I. Pigment Yellow 109 (C.I. No. 56284), and C.I. Pigment Orange 61 (C.I. No. 11295); pyranthrone-series pigments, such as C.I. Pigment Orange 40 (C.I. No. 59700), and C.I. Pigment Red 216 (C.I. No. 59710); and isoviolanthrone-series pigments, such as C.I. Pigment Violet 31 (C.I. No. 60010).

Preferred pigments are quinacridone-, diketopyrrolopyrrole-, condensed disazo-, or phthalocyanine-series pigments; and particularly preferred pigments are quinacridone-, condensed disazo-, or phthalocyanine-series pigments. In the producing method of the present invention, two or more kinds of the organic pigments or a solid solution of the organic pigment, or a combination of the organic pigment with an inorganic pigment may be used.

It is necessary that the organic pigment is homogeneously dissolved in an alkaline or acidic aqueous medium. It depends on the nature of the pigment whether the organic pigment in interest may be more easily dissolved homogeneously under either alkaline or acidic, to select the conditions in which the organic pigment be dissolved under alkaline or dissolved under acidic. In general, in the case of the pigment having in the molecule thereof a group dissociative under alkaline, the alkaline medium is used, and in the case of the pigment having no group dissociative under alkaline and having in the molecule thereof many nitrogen atoms, to which protons easily adhere, the acidic medium is used. For example, quinacridone-, diketopyrrolopyrrole-, and condensed disazo-series pigments are dissolved in the alkaline medium, and a phthalocyanine-series pigment is dissolved in the acidic medium.

Examples of a base that can be used in the case that the pigment is dissolved in alkaline medium, include inorganic bases, such as lithium hydroxide, sodium hydroxide, potassium hydroxide, calcium hydroxide, and barium hydroxide; and organic bases, such as trialkylamine, diazabicycloundecene (DBU), and metal alkoxides. Among these, the inorganic bases are preferable.

The amount of the base to be used is not particularly limited, as long as the base in the amount can make the pigment be dissolved homogeneously. In the case of the inorganic base, the amount thereof is preferably from 1.0 to 30 mole equivalents, more preferably from 2.0 to 25 mole equivalents, and further preferably from 3 to 20 mole equivalents, to the pigment. In the case of the organic base, the amount thereof is preferably from 1.0 to 100 mole equivalents, more preferably from 5.0 to 100 mole equivalents, and further preferably from 20 to 100 mole equivalents, to the pigment.

Examples of an acid to be used in the case that the pigment is dissolved in the acidic medium, include inorganic acids, such as sulfuric acid, hydrochloric acid, and phosphoric acid; and organic acids, such as acetic acid, trifluoroacetic acid, oxalic acid, methanesulfonic acid, and trifluoromethanesulfonic acid. Among these, the inorganic acids are preferable, and sulfuric acid is especially preferable.

The amount of the acid to be used is not particularly limited, as long as the acid in the amount can make the pigment be dissolved homogeneously. In many cases, the acid is used in a larger or more excessive amount than the base. Regardless the kind of the acid being an inorganic acid or an organic acid, the amount of the acid to be used is preferably from 3 to 500 mole equivalents, more preferably from 10 to 500 mole equivalents, and further preferably from 30 to 200 mole equivalents, to the pigment.

The following describes the aqueous medium. The aqueous medium that can be used in the present invention is water alone, or a mixed solvent with an organic solvent soluble in (or miscible with) water. The addition of the organic solvent is performed in the case that, according to use of only water, it is impossible to homogeneously dissolve the pigment or a dispersing agent, or it is impossible to obtain a viscosity necessary for flow in the channel, and in the case necessary for forming laminar flow. Thus, the addition of the water-soluble organic solvent is not essential, but is performed in many cases. Examples of the organic solvent to be added include polyhydric alcohol-series solvents, typified, for example, by ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerin, and trimethylolpropane; lower monoalkyl ether-series solvents of a polyhydric alcohol, such as ethylene glycol monomethyl (or ethyl) ether, diethylene glycol monomethyl (or ethyl) ether, and triethylene glycol monoethyl (or butyl) ether; polyether-series solvents, such as ethylene glycol dimethyl ether (monoglyme), diethylene glycol dimethyl ether (diglyme), and triehtylene glycol dimethyl ether (triglyme); amide-series solvents, such as dimethylformamide, dimethylacetamide, 2-pyrrolidone, N-methyl-2-pyrrolidone, 1,3-dimethyl-2-imidazolidinone, urea, and tetramethyl urea; sulfur-containing solvents, such as sulfolane, dimethylsulfoxide, and 3-sulfolene; polyfunctional solvents, such as diacetone alcohol, and diethanolamine; carboxylic acid-series solvents, such as acetic acid, maleic acid, docosahexaenoic acid, trichloroacetic acid, and trifluoroacetic acid; and sulfonic acid-series solvents, such as methanesulfonic acid, and trifluorosulfonic acid. These solvents may be mixed in combination with two or more thereof, and used.

The organic solvent is preferably an amide-series solvent or a sulfur-containing solvent in the case of alkaline, and a carboxylic acid-series solvent, a sulfur-containing solvent or a sulfonic acid-series solvent in the case of acidic; more preferably the sulfur-containing-series solvent in the case of alkaline, and a sulfonic acid-series solvent in the case of acidic; and particularly preferably dimethylsulfoxide (DMSO) in the case of alkaline, and methanesulfonic acid in the case of the acidic.

The blend ratio of water to the organic solvent is not particularly limited, as long as at the ratio it is possible to dissolve the pigment to be used homogeneously. The blend ratio of water to the organic solvent is preferably from 0.05 to 10 (mass ratio) in the alkaline aqueous medium. In the case that an inorganic acid is used in the acidic aqueous medium, it is preferable to use, for example, sulfuric acid alone without using any organic solvent. When an organic acid(s) is used, the organic acid itself is an organic solvent. Thus, in order to adjust the viscosity and the solubility of the aqueous medium, a plurality of acids are mixed or water is added thereto. Preferably, the mass ratio of water to the organic solvent(s) (organic acid(s)) is from 0.005 to 0.1.

In the producing method of the present invention, it is preferred to introduce into the channel a solution homogeneously dissolving an organic pigment or a material therefor. When a suspension is introduced into the channel, the size of the particles therein becomes large or pigment fine-particles having a wide particle size distribution are generated. This results, as the case may be, to be apt to block the channel. The wording "homogeneously dissolving" means a solution in which turbidity (muddiness) is hardly observed when the solution is observed under visible light. In the present invention, a solution obtained by filtration through a micro-filter having pores of 1 μm or less in diameter, or a solution which does not contain any substance remaining after the solution is filtrated through a filter having pores of 1 μm or less in diameter, is defined as a homogeneously dissolved solution (or a homogeneous solution).

The following describes the hydrogen ion exponent (pH). The hydrogen ion exponent (pH) is the common logarithm of the reciprocal number of a hydrogen ion concentration (molar concentration), and may be called the hydrogen exponent. The hydrogen ion concentration is the concentration of hydrogen ion $H^+$ in a solution, and means the mole number of hydrogen ion present in a 1-liter solution. Since the hydrogen ion concentration changes in a very wide range, it is usually represented by the hydrogen ion exponent (pH). For example, pure water contains $10^{-7}$ mol of hydrogen ion at 1 atmosphere and 25°C. Thus, the pH thereof is 7, which is neutral. The aqueous solution having a pH of less than 7 is acidic, and the aqueous solution having a pH of more than 7 is alkaline. As a method of measuring the pH value, there are potentiometric and colorimetric measuring methods.

In the producing method of the present invention, the hydrogen ion exponent (pH) is changed in the step of causing the solution to flow in a channel, thereby producing pigment fine particles. This process is preferably performed using a channel having an introducing port different from an introducing port for the homogeneous solution of the organic pigment, for example, a channel having at least two introducing ports as illustrated in Fig. 1-1 or 2-1. Specifically, a homogeneous solution of an organic pigment is introduced into the introducing port 11 in Fig. 1-1 or the introducing port 21 in Fig. 2-1, and neutral, acidic or alkaline water or an aqueous solution in which a dispersing agent is dissolved is introduced into the introducing port 12 in Fig. 1-1 or the introducing port 22 in Fig. 2-1. The two solutions are brought into contact with each other in the channel 13c or 23c, thereby changing the hydrogen ion concentration, that is, the hydrogen ion exponent (pH), of the solution containing the organic pigment toward neutrality (pH 7). In the case that the equivalent diameter of the channel is in a micro-scale, any flow therein has a small Reynolds number. Consequently, stable laminar flows (cylindrical laminar flows in Fig. 2-1) are formed, and water and ions diffuse and transfer through a stable interface between the two flows so that the hydrogen ion exponent (pH) of the solution containing the organic pigment is gradually changed toward neutrality. The pigment is not easily dissolved in an aqueous medium at a low alkalinity or a low acidity, therefore, as the hydrogen ion exponent (pH) of the solution containing the organic pigment is changed toward neutrality, pigment fine particles are gradually precipitated.

In the case that pigment fine particles are produced from a pigment dissolved in an alkaline aqueous medium, the change of the hydrogen ion exponent (pH) is generally performed within the range of 16.0 to 5.0, preferably 16.0 to 10.0. In the case that pigment fine particles are produced from a pigment dissolved in an acidic aqueous medium, the change of the hydrogen ion exponent (pH) is generally performed within the range of 1.5 to 9.0, preferably 1.5 to 4.0. The range of the change depends on the value of the hydrogen ion exponent (pH) of the organic pigment solution, but the range may be a range sufficient for promoting the precipitation of the organic pigment.

The pigment fine particles generated in the channel of a micro-scale flow into an outlet in the state that the particles are contained in one of the laminar flows, without diffusing. Therefore, when a channel apparatus having outlets designed, as illustrated in Fig. 3-1 or 4, is used, the laminar flow containing the organic pigment fine-particles can be separated. When this method is used, a high-concentration pigment dispersion can be obtained, and simultaneously the water-soluble organic solvent, the alkaline or acidic water, and an excessive of the dispersing agent used to prepare the homogeneous solution can be removed. Thus, this process is advantageous. It is also possible to avoid the following: that the two solutions are finally mixed so that pigment crystals get coarse or deteriorate.

In the present invention, preferably in the second and third embodiments of the present invention, when pigment fine particles are produced, the reaction temperature inside the channel is preferably within such a range that the solvent is not solidified or vaporized, and it is preferably from -20 to 90°C, more preferably from 0 to 50°C, and particularly preferably from 5 to 15°C.

In the producing method of fine-particles of an organic pigment according to the present invention, preferably the forth embodiment of the present invention, fine-particles of larger sizes can be produced, by raising the temperature during the contacting and flowing; and alternatively, fine particles of smaller sizes can be produced, by lowering the temperature during the contacting and flowing. The temperature during the contact and flow is preferably controlled within the range of -20 to 90°C, more preferably of 0 to 50°C, and particularly preferably of 5 to 30°C. The solvent may solidify at too low temperatures, or it may vaporize at too high temperatures.

In a preferred mode of the present invention, particularly of the forth embodiment of the present invention, for example, under such conditions that 300-nm fine-particles of pigment can be produced at room temperature (28°C), fine particles of preferably 20 to 200 nm, more preferably 50 to 100 nm can be produced when the reaction temperature is set at 3°C, or alternatively fine particles of preferably 300 to 600 nm, more preferably 400 to 500 nm can be produced when the reaction temperature is set at 70°C. In another preferred mode, for example, under such conditions that 100-nm fine-particles of pigment can be produced at room temperature (28°C), fine particles of preferably 5 to 50 nm, more preferably 10 to 20 nm can be produced when the reaction temperature is set at 3°C, or alternatively fine particles of preferably 150 to 350 nm, more preferably 200 to 250 nm can be produced when the reaction temperature is set at 70°C.

In the present invention, preferably in the forth embodiment of the present invention, in practice, it should be difficult to measure the temperature in the flowing solutions during the contacting and flowing. Alternatively, the temperature of a thermostatic bath or the temperature of a channel wall surface may be measured and used, or the temperature of the solution to be allowed to flow or the temperature of the resulting dispersion may be used, for an estimation of the temperature during the contacting and flowing.

When pigment fine particles are produced, the flow velocity (flow rate) of the fluid which flows in the channel can be appropriately adjusted depending on restrictions on the fluid controlling system or the size of the resulting fine particles, but it is preferably from 0.1 mL/hour to 300 L/hour, more preferably from 0.2 mL/hour to 30 L/hour, further preferably from 0.5 mL/hour to 15 L/hour, and particularly preferably from 1 mL/hour to 6 L/hour.

In the producing method of the present invention, particularly of the second, third and forth embodiments of the present invention, the concentration of a substrate (such as an organic pigment or a reaction component thereof) which flows in the channel, is generally in the range of 0.5 to 20 mass%, and preferably in the range of 1.0 to 10 mass%.

In the present invention, the concentration of a substrate (such as an organic pigment or a reaction component thereof) which flows in the channel, is generally in the range of 0.01 to 20 mass%, preferably in the range of 0.1 to 15 mass%, and particularly preferably in the range of 1.0 to 10 mass%.

In the method of the present invention, a dispersing agent can be incorporated into the solution containing an organic pigment and/or a solution to be brought into contact with the solution containing an organic pigment (e.g. an aqueous medium which is an aqueous solution for changing the hydrogen ion exponent (pH)). The dispersing agent has a function (1) that the dispersing agent is rapidly adsorbed on the surface of the precipitated pigment, to form fine pigment particles, and (2) that these particles are prevented from aggregating again.

In the present invention as the dispersing agent, use can be made of an anionic, cationic, amphoteric, nonionic or pigmentary and low-molecular-weight or polymer dispersing agent. The molecular weight of the polymer dispersing agent for use may be any value, as long as the dispersing agent can be uniformly dissolved in a solution. (Concerning the present invention, the term "molecular weight" means a weight average molecular weight, unless otherwise stated. Polymer compounds are polydispersion-series compounds and do not always have a single molecular weight or a single particle mass. Thus, their measured molecular weights should be represented by a certain type of average molecular weight. The three main types of the average molecular weight are: (1) number average molecular weight (Mn), (2) weight average molecular weight (Mw) and (3) Z average molecular weight (Mz); and the relationship Mn < Mw < Mz can be established.)

These dispersing agents may be used alone or in combination. Dispersing agents to be used in dispersion of the pigment are described in detail in "Dispersion Stabilization of Pigment and Surface Treatment Technique/Evaluation" (published by Japan Association for International Chemical Information, on December 2001), pp. 29-46.

Examples of the anionic dispersing agent (anionic surfactant) include N-acyl-N-alkyltaurine salts, fatty acid salts, alkylsulfates, alkylbenzenesulfonates, alkylnaphthalenesulfonates, dialkylsulfosuccinates, alkylphosphates, naphthalenesulfonic acid/formalin condensates, and polyoxyethylenealkylsulfates. N-acyl-N-alkyltaurine salts are particularly preferable. As the N-acyl-N-alkyltaurine salts, those described in JP-A-3-273067 are preferable. These anionic dispersing agents may be used alone or in combination of two or more thereof.

Examples of the cationic dispersing agent (cationic surfactant) include quaternary ammonium salts, alkoxylated polyamines, aliphatic amine polyglycol ethers, aliphatic amines, diamines and polyamines derived from aliphatic amine and aliphatic alcohol, imidazolines derived from aliphatic acid, and salts of these cationic substances. These cationic dispersing agents may be used alone or in combination of two or more thereof.

The amphoteric dispersing agent is a dispersing agent having, in the molecule thereof, an anionic group moiety which the anionic dispersing agent has in the molecule, and a cationic group moiety which the cationic dispersing agent has in the molecule.

Examples of the nonionic dispersing agents (nonionic surfactant) include polyoxyethylenealkyl ethers, polyoxyethylenealkylaryl ethers, polyoxyethylene fatty acid esters, sorbitan fatty acid esters, polyoxyethylenesorbitan fatty acid esters, polyoxyethylenealkylamines, and glycerin fatty acid esters. Among these, polyoxyethylenealkylaryl ethers are preferable. These nonionic dispersing agents may be used alone or in combination of two or more thereof.

The pigmentary dispersing agent is defined as a dispersing agent derived from an organic pigment as a parent material, and prepared by chemically modifying a structure of the parent material. Examples of the pigmentary dispersing agent include sugar-containing pigmentary dispersing agents, piperidyl-containing pigmentary dispersing agents, naphthalene- or perylene-derivative pigmentary dispersing agents, pigmentary dispersing agents having a functional group linked through a methylene group to a pigment parent structure, pigmentary dispersing agents (parent structure) chemically modified with a polymer, pigmentary dispersing agents having a sulfonic acid group, pigmentary dispersing agents having a sulfonamido group, pigmentary dispersing agents having an ether group, and pigmentary dispersing agents having a carboxylic acid group, carboxylic acid ester group or carboxamido group.

Examples of the polymer dispersing agent, in particular, which can be preferably used in the second and third embodiments, include polyvinyl pyrrolidone, polyvinyl alcohol, polyvinyl methyl ether, polyethylene oxide, polyethylene glycol, polypropylene glycol, polyacrylamide, vinyl alcohol/vinyl acetate copolymer, partial-formal products of polyvinyl alcohol, partial-butyral products of polyvinyl alcohol, vinylpyrrolidone/vinyl acetate copolymer, polyethylene oxide/propylene oxide block copolymer, polyacrylic acid salts, polyvinyl sulfuric acid salts, poly(4-vinylpyridine) salts, polyamides, polyallylamine salts, condensed naphthalenesulfonic acid salts, styrene/acrylic acid salt copolymers, styrene/methacrylic acid salt copolymers, acrylic acid ester/acrylic acid salt copolymers, acrylic acid ester/methacrylic acid salt copolymers, methacrylic acid ester/acrylic acid salt copolymers, methacrylic acid ester/methacrylic acid salt copolymers, styrene/itaconic acid salt copolymers, itaconic acid ester/itaconic acid salt copolymers, vinylnaphthalene/acrylic acid salt copolymers, vinylnaphthalene/methacrylic acid salt copolymers, vinylnaphthalene/itaconic acid salt copolymers, cellulose derivatives, and starch derivatives. Besides, natural polymers can be used, examples of which include alginic acid salts, gelatin, albumin, casein, gum arabic, tragacanth gum, and ligninsulfonic acid salts. Polyvinyl pyrrolidone is particularly preferable. These polymer dispersing agents may be used alone or in combination of two or more thereof.

Examples of a preferred embodiment of the present invention include an embodiment, in which the anionic dispersing agent is incorporated in the aqueous medium (the solution to be brought into contact with the organic pigment solution), and the nonionic dispersing agent and/or the polymer dispersing agent are(is) incorporated in the solution in which the organic pigment is dissolved, and then the solutions are brought into contact with each other.

In the present invention the amount of the dispersing agent to be blended is preferably from 0.1 to 1,000 parts by mass, more preferably from 1 to 500 parts by mass, and further preferably from 10 to 250 parts by mass, to 100 parts by mass of the pigment, to further improve the uniform dispersibility and storage stability of the pigment. If the amount of the dispersing agent to be added is too small, the dispersion stability of the organic pigment fine particles may not be improved, in some cases.

In the method of the present invention, particularly of the second embodiment of the present invention, a dispersing agent can be incorporated into the solution containing an organic pigment and/or a solution to be brought into contact with the solution containing an organic pigment (e.g. an aqueous medium which is an aqueous solution for changing the hydrogen ion exponent (pH)). In this case, one dispersing agent or a combination of two or more dispersing agents may be added to a single solution. At least one polymer dispersing agent is preferably added to the organic pigment solution. The molecular weight of the polymer dispersing agent for use may be any value, as long as the dispersing agent can be uniformly dissolved in a solution, but the polymer dispersing agent preferably has a molecular weight of 1,000 to 2,000,000, more preferably of 5,000 to 1,000,000, still more preferably of 10,000 to 500,000, and particularly preferably of 10,000 to 100,000.

The dispersing agent has a function (1) that the dispersing agent is rapidly adsorbed on the surface of the precipitated pigment, to form fine pigment particles, and (2) that these particles are prevented from aggregating again. In the method of producing fine-particles of an organic pigment according to the present invention, particularly the second embodiment of the present invention, a larger molecular weight of the polymer dispersing agent to be added to the organic pigment solution can give smaller particle diameters of the obtained organic pigment fine particles.

In the method of the present invention, particularly of the second embodiment of the present invention, the polymer dispersing agent may be added together with any other dispersing agent such as an anionic, cationic, amphoteric, nonionic or pigmentary dispersing agent. Preferable specific examples, or the like, of each of these dispersing agents are the same as those mentioned in the above.

Examples of a preferred embodiment of the present invention, particularly of the second embodiment of the present invention, include an embodiment, in which the anionic dispersing agent is incorporated in the aqueous medium (the solution to be brought into contact with the organic pigment solution), and the polymer dispersing agent (as needed, together with the nonionic dispersing agent) is incorporated in the solution in which the organic pigment is dissolved, and then the solutions are brought into contact with each other.

In the present invention, preferably in the second embodiment of the present invention, the amount of the dispersing agent to be blended is preferably from 0.1 to 1,000 parts by mass, more preferably from 1 to 500 parts by mass, and further preferably from 10 to 250 parts by mass, to 100 parts by mass of the pigment, to further improve the uniform dispersibility and storage stability of the pigment. If the amount of the dispersing agent to be added is too small, the dispersion stability of the organic pigment fine particles may not be improved, in some cases.

In the method of the present invention, particularly of the third embodiment of the present invention, for producing organic pigment fine-particles, a dispersing agent can be incorporated into the solution containing an organic pigment and/or a solution to be brought into contact with the solution containing an organic pigment (e.g. an aqueous medium which is an aqueous solution for changing the hydrogen ion exponent (pH)). In this case, one dispersing agent or a combination of two or more dispersing agents may be added to a single solution, and at least one dispersing agent is preferably added to the organic pigment solution, and at least one polymer dispersing agent is more preferably added to the organic pigment solution. The dispersing agent has a function (1) that the dispersing agent is rapidly adsorbed on the surface of the precipitated pigment, to form fine pigment particles, and (2) that these particles are prevented from aggregating again.

In the present invention, particularly the third embodiment of the present invention, as the dispersing agent to be added together with the polymer dispersing agent, use can be made of an anionic, cationic, amphoteric, nonionic or pigmentary and low-molecular-weight or polymer dispersing agent. The molecular weight of the polymer dispersing agent for use may be any value, as long as the dispersing agent can be uniformly dissolved in a solution, but the polymer dispersing agent preferably has a molecular weight of 1,000 to 2,000,000, more preferably of 5,000 to 1,000,000, still more preferably of 10,000 to 500,000, and particularly preferably of 10,000 to 100,000. Preferable specific examples, or the like, of each of these dispersing agents are the same as those mentioned in the above.

Examples of a preferred embodiment of the present invention, particularly of the third embodiment of the present invention, include an embodiment, in which the anionic dispersing agent is incorporated in the aqueous medium (the solution to be brought into contact with the organic pigment solution), and the polymer dispersing agent (if necessary, together with the nonionic dispersing agent) is incorporated in the solution in which the organic pigment is dissolved, and then the solutions are brought into contact with each other.

The dispersing agents further improve the uniform dispersibility and storage-stability of the pigment. According to the producing method of the present invention, particularly of the third embodiment of the present invention, if the amount of the dispersing agent to be contained in the organic pigment solution is increased, the resulting fine-particles of the organic pigment can have smaller sizes. Based on 100 parts by mass of the pigment, the addition amount of the dispersing agent is preferably varied within the range of 0.01 to 20 parts by mass, more preferably of 0.05 to 10 parts by mass, and particularly preferably of 0.1 to 5 parts by mass. Further, according to the producing method of the present invention, particularly of the third embodiment of the present invention, by controlling the content of the (polymer) dispersing agent, it is possible not only to control the size of the obtained particles to be relatively larger or smaller, but also to obtain fine-particles of a specifically desired particle size.

In a preferred mode of the present invention, particularly of the third embodiment of the present invention, for example, under such conditions that pigment fine-particles with a diameter of 200 nm can be produced using the (polymer) dispersing agent in an addition amount of triplex parts, fine particles with a diameter of 200 to 300 nm can be produced when the addition amount is set at monoplex part, or alternatively fine particles with a diameter of 100 to 150 nm can be produced when the addition amount is set at quintuple parts. In another preferred mode of the present invention, particularly of the third embodiment of the present invention, for example, under such conditions that pigment fine-particles with a diameter of 50 nm can be produced using the (polymer) dispersing agent in an addition amount of triplex parts, fine particles with a diameter of 80 to 120 nm can be produced when the addition amount is set at monoplex part, or alternatively fine particles with a diameter of 10 to 20 nm can be produced when the addition amount is set at quintuple parts.

If the amount of the dispersing agent is too small, the dispersion stability of fine-particles of the organic pigment cannot be improved in some cases. If the amount of the dispersing agent is too large, the viscosity can be increased so that the process of preparing the pigment can become difficult in some cases.

In the method of the present invention, particularly of the forth embodiment of the present invention, for producing organic pigment fine-particles, a dispersing agent can be incorporated into the solution containing an organic pigment and/or a solution to be brought into contact with the solution containing an organic pigment (e.g. an aqueous medium which is an aqueous solution for changing the hydrogen ion exponent (pH)). The dispersing agent has a function (1) that the dispersing agent is rapidly adsorbed on the surface of the precipitated pigment, to form fine pigment particles, and (2) that these particles are prevented from aggregating again.

In the present invention, particularly in the forth embodiment of the present invention, as the dispersing agent, use can be made of an anionic, cationic, amphoteric, nonionic or pigmentary and low-molecular-weight or polymer dispersing agent. The molecular weight of the polymer dispersing agent for use may be any value, as long as the dispersing agent can be uniformly dissolved in a solution, but the polymer dispersing agent preferably has a molecular weight of 1,000 to 2,000,000, more preferably of 5,000 to 1,000,000, still more preferably of 10,000 to 500,000, and particularly preferably of 10,000 to 100,000. Preferable specific examples, or the like, of each of these dispersing agents are the same as those mentioned in the above.

Examples of a preferred embodiment of the present invention, particularly of the forth embodiment of the present invention, include an embodiment, in which the anionic dispersing agent is incorporated in the aqueous medium (the solution to be brought into contact with the organic pigment solution), and the nonionic dispersing agent and/or the polymer dispersing agent are(is) incorporated in the solution in which the organic pigment is dissolved, and then the solutions are brought into contact with each other.

In the present invention, preferably in the forth embodiment of the present invention, the amount of the dispersing agent to be blended is preferably from 0.1 to 1,000 parts by mass, more preferably from 1 to 500 parts by mass, and further preferably from 10 to 250 parts by mass, to 100 parts by mass of the pigment, to further improve the uniform dispersibility and storage stability of the pigment. If the amount of the dispersing agent to be added is too small, the dispersion stability of the organic pigment fine particles may not be improved, in some cases.

In the measuring method of fine particles, the average size of the group of the particles can be expressed by a numerical value. Examples of the numerical value which is widely used, include mode diameter, which shows the maximum value of the particle size distribution; medium diameter, which corresponds to the central value of the integration distribution curve thereof; and various average diameters (such as length average, area average, and weight average). In the present invention, the term "particle diameter" refers to median diameter, unless otherwise stated. The particle diameter of the organic pigment fine-particles produced by the method of the present invention is arbitrary as far as the channel is not blocked. The particle diameter is preferably 1 $\mu$m or less, more preferably from 3 to 800 nm, and particularly preferably from 5 to 500 nm. When the pigment fine-particles obtained by the producing method of the present invention is used for inkjet ink, the particle diameter is preferably 150 nm or less, more preferably 80 nm or less, and particularly preferably 50 nm or less.

Having a uniform particle size of fine-particles, i.e. having a monodisperse fine-particle system, is an important factor that decides performances of the particles, since not only it means that the particles included therein have uniform diameters but also it means that there is no fluctuation among particles in chemical composition and crystal structure inside the particles. In particular, this factor is regarded as important that governs the characteristics of the particles, in ultrafine-particles having nanometer order particle sizes. The producing method of the present invention is excellent in the point that, not only it can control the size of particles, but also it can obtain particles of uniform sizes. The arithmetic standard deviation is used as an index of having a uniform size. The arithmetic standard deviation of the pigment fine-particles produced according to the present invention is preferably 130 nm or less, particularly preferably 80 nm or less. The arithmetic standard deviation is obtained by subtracting the 16% particle diameter from the 84% particle diameter in the integrated distribution, and further dividing this difference by 2, in a method obtaining the standard deviation assuming that a particle size distribution be a normal distribution.

According to the producing method of the present invention, pigment fine-particles (or a dispersion thereof) with a desired particle size can be produced even at a very small particle-diameter level of 1 $\mu$m or less. The obtained pigment fine-particles can also have monodispersity, and thus the resulting ink prepared by using the pigment fine-particles can have a high optical density and a high chroma and brightness, and can form a highly-uniform image surface.

Examples of the solvent that can be used in the producing method of the present invention include, as well as the above solvents, ethers, such as tetrahydrofuran, dioxane, dimethoxyethane, and diglyme; esters, such as ethyl acetate, and butyl acetate; ketones, such as methyl ethyl ketone, 2-methyl-4-pentanone, and cyclohexanone; alcohols, such as ethanol, ethylene glycol, and diethylene glycol; nitriles, such as acetonitrile, and propionitrile; amide-series solvents, such as N,N-dimethylformamide, N,N-dimethylacetoamide, N-methylpyrrolidone, and N,N-dimethylimidazolidone; and sulfur-containing solvents, such as dimethylsulfoxide, and sulfolane. If necessary, for example, a water-soluble organic solvent which is added to an ink composition, and other components may be added to the solvent. As these solvent components, for example, constituents of pigment dispersing agents, as described in JP-A-2002-194263 and JP-A-2003-26972, can be used.

The solutions to flow may be fluids which are miscible with each other, or fluids which are immiscible with each other. Examples of the fluids miscible with each other include: solutions containing the same organic solvents; solutions containing organic solvents having relatively close natures; and a combination of a solution containing an organic solvent high in polarity, such as methanol, and water. Examples of the fluids immiscible with each other include a combination of a solution containing a solvent of low polarity, such as hexane, and a solution containing a solvent of high polarity, such as methanol.

A gas, such as air and oxygen, may be involved as an oxidizing agent in the reaction. In such a case, it may be dissolved in the reaction fluid(s) or introduced in the form of a gas into the channel. The method of introducing it as a gas is preferred.

The obtained pigment dispersion by the method of the present invention can be separated from the reaction solution by filtration or centrifugation, and then is sufficiently washed with, for example, an amide-series solvent, such as N,N-dimethylacetoamide, thereby yielding the pigment fine-particles with a high purity.

For example, in the case of quinacridone, the purity of the pigment may be determined by the following method, after the quinacridone is taken out, washed and sufficiently dried. The quinacridone is precisely weighed (for example, 2 mg or so) and dissolved in concentrated sulfuric acid (for example, 100 mL of 95% concentrated sulfuric acid at 10°C or lower). The UV absorption of the solution is measured, and the purity is calculated by comparing the resulting absorption value (for example, at 606 nm) with the absorption value of a standard sample at the same wavelength. Further, with respect to a substituted quinacridone, the absorption wavelength thereof is shifted from that of unsubstituted quinacridone. Therefore, the optimal wavelength of a standard product to the substituted quinacridone to be measured is adjusted, and then the purity of the substituted quinacridone is determined in the same manner as described above.

The purity of the produced condensed disazo-series pigment is measured by: taking out the condensed disazo-series pigment; washing it; drying it sufficiently; and comparing the absorption spectrum of a solution of the pigment dissolved, for example, in a mixed solvent of sodium hydroxide and dimethylsulfoxide, with the absorption spectrum of a standard product whose purity is known, thereby to determine the purity.

According to the present invention, it is possible to provide a method of producing fine-particles of an organic pigment, which solve the problems of the conventional build-up process. More specifically, according to the present invention, it is possible to obtain an organic pigment of high purity in a simple manner, and to provide a specific method of producing the same. Further, according to the present invention, it is possible to obtain organic pigment fine-particles uniform in particle diameters (e.g. monodisperse, organic pigment fine-particles), and to provide a method of producing fine-particles of an organic pigment in which the particle size of the fine-particles can be freely controlled.

According to the present invention, by conducting a flow reaction in a laminar flow channel, it is possible to produce a pigment and pigment fine-particles, more simply and rapidly, under mild conditions, compared with the conventional methods conducted in a flask or the like.

That is, the reaction time of a flow reaction using a laminar flow channel is controlled, and further the precision in the controlling of the reaction temperature in a narrow space is used. In this way, unpreferable secondary reaction(s) can be suppressed.

Further, in the preparation of a pigment made into fine particles, particularly in the preparation of a pigment dispersion, use can be made of not the conventional breakdown method, in which starting materials are crushed with a mill, but the numbering-up of the manufacturing process (arrangement of a plurality of units in parallel). Therefore, the investigating time for commercialization can be remarkably reduced.

Further, in the preparation of a pigment made into fine particles, particularly in the preparation of a pigment dispersion, use can be made of the numbering-up of the manufacturing process (arrangement of a plurality of units in parallel). Therefore, the investigating time for commercialization can be remarkably reduced, compared with the conventional scale-up method.

Further, according to the production method of the present invention, a more precise monodispersion state of fine-particles of an organic pigment can be realized. Furthermore, control of the particle diameter and the particle shape (particle diameter (distribution)) of the fine-particles can be realized. Therefore, it is possible to obtain fine-particles of the desired size in a wide range. According to the present invention, it can be expected that the resulting dispersion or fine particles contained therein exhibit a new function or a higher function than that of the current products.

The present invention will be described in more detail based on the following examples, but the invention is not intended to be limited thereto.

<u>EXAMPLES</u>

The pH values described in the following examples and comparative examples were measured with a glass electrode-type hydrogen ion concentration meter, HM-40V (trade name, measuring range: pH of 0 to 14) manufactured by TOA Electronics, Ltd.

Example 201

At room temperature, 0.15 g of 2,9-dimethylquinacridone (HOSTAPERM PINK E (trade name), manufactured by Clariant) was dissolved into 13.35 mL of dimethylsulfoxide, 1.65 mL of 0.8 mol/1. aqueous potassium hydroxide solution, and 0.75 g (which was 5 parts by weight based on 1 part by weight of the pigment) of a dispersant, polyvinyl pyrrolidone (K30 (trade name), with a molecular weight of 40,000, manufactured by Wako Pure Chemicals Industries Ltd.), to form a solution (designated as 2-IA solution). The pH of the 2-IA solution was beyond the measuring limit value (pH 14).

Separately, 0.75 g of a dispersant, sodium N-oleoyl-N-methyltaurine was mixed with 90 mL of distilled water, to form a solution (designated as 2-IIA solution). The pH of the 2-IIA solution was 6.9.

These solutions were each passed through a 0.45$\mu$m-microfilter (manufactured by Fuji Photo Film Co., Ltd.), so that impurities such as dust were removed. The reactor as shown in Fig. 1-1 was used to perform a reaction by the following procedure. Two Teflon (registered trademark) tubes each with a length of 50 cm and an equivalent diameter of 1 mm were connected to the two inlets of a Y-shaped Teflon (registered trademark) connector with an equivalent diameter of 500 $\mu$m, each through a connector. Two syringes containing the 2-IA and 2-IIA solutions, respectively, were each connected to the two tubes, and the resulting unit was fitted to a pump. The outlet of the connector was connected to a Teflon (registered trademark) tube with a length of 1 m and an equivalent diameter of 500 $\mu$m. The Y-shaped connector was cooled to 5°C with ice water. The 2-IA and 2-IIA solutions were fed at flow rates of 1 mL/hr and 6 mL/hr, respectively. A laminar flow was formed in the channel (with a Reynolds number of about 5.0), and dispersion of 2,9-dimethylquinacridone was obtained, which was collected from the front end of the tube. The pH of the collected dispersion was 12.4. The particle diameter of fine particles in the resulting dispersion was measured with a dynamic light scattering particle-diameter analyzer, and the measured median diameter (in terms of volume) was 83.1 nm.

(Example 202)

Fine-particle dispersions were produced using the process of Example 201, except that the molecular weight of polyvinyl pyrrolidone was changed to 360,000 (K90 (trade name), manufactured by Wako Pure Chemicals Industries Ltd.) or 10,000 (K15 (trade name), manufactured by Tokyo Kasei Kogyo Co., Ltd.). The resulting fine particles were measured for median diameter (in terms of volume). The results are shown in Table 4 together with those of Example 201. In all cases, a laminar flow of the solution was formed in the channel.

Table 4

| Molecular weight* | 360,000 | 40,000 | 10,000 |
|---|---|---|---|
| Median diameter (nm) | 33.7 | 83.1 | 128.6 |
| *The weight average molecular weight of polyvinyl pyrrolidone | | | |

From these results, it was found that according to the method of the present invention, it is possible to control the shape of fine particles (particle diameter), and to produce fine particles of the desired particle size in a wide range.

Example 301

At room temperature, 0.075 g of 2,9-dimethylquinacridone (HOSTAPERM PINK E (trade name), manufactured by Clariant) was dissolved into 6.675 mL of dimethylsulfoxide, 0.825 mL of 0.8 mol/L aqueous potassium hydroxide solution, and 0.0375 g (which was 0.5 part by weight based on 1 part by weight of the pigment) of a dispersant, polyvinyl pyrrolidone (K15 (trade name) with a molecular weight of 10,000, manufactured Wako Pure Chemicals Industries Ltd.), to form a solution (designated as 3-IA solution). The pH of the 3-IA solution was beyond the measuring limit value (pH 14).

Separately, 0.75 g of a dispersant, sodium N-oleoyl-N-methyltaurine was mixed with 90 mL of distilled water, to form a solution (designated as 3-IIA solution). The pH of the 3-IIA solution was 6.9.

These solutions were each passed through a 0.45$\mu$m-microfilter (manufactured by Fuji Photo Film Co., Ltd.), so that impurities such as dust were removed. The reactor as shown in Fig. 1-1 was used to perform a reaction by the following procedure. Two Teflon (registered trademark) tubes each with a length of 50 cm and an equivalent diameter of 1 mm were connected to the two inlets of a Y shaped Teflon (registered trademark) connector with an equivalent diameter of 500 $\mu$m, each through a connector. Two syringes containing the 3-IA and 3-IIA solutions, respectively, were each connected to the two tubes, and the resulting unit was fitted to a pump. The outlet of the connector was connected to a Teflon (registered trademark) tube with a length of 1 m and an equivalent diameter of 500 $\mu$m. The Y-shaped connector was cooled to 5°C with ice water. The 3-IA and 3-IIA solutions were fed at flow rates of 1 mL/hr and 6 mL/hr, respectively. A laminar flow was formed in the channel (with a Reynolds number of about 5.0), and dispersion of 2,9-dimethylquinacridone was obtained, which was collected from the front end of the tube. The pH of the collected dispersion was 12.4. The particle diameter of fine particles in the resulting dispersion was measured with a dynamic light scattering particle-diameter analyzer, and the measured median diameter (in terms of volume) was 418 nm.

Example 302

Fine-particle dispersions were produced using the process of Example 301, except that to the 3-IA solution, polyvinyl pyrrolidone was added in an amount of 3 parts by weight or 5 parts by weight based on 1 part of the pigment. The resulting fine particles were measured for median diameter (in terms of volume). The results are shown in Table 5 together with those of Example 301. In all cases, a laminar flow of the solution was formed in the channel.

Table 5

| Addition amount* | 0.5 | 3.0 | 5.0 |
|---|---|---|---|
| Median diameter (nm) | 418.0 | 180.1 | 128.6 |
| * The ratio of the addition amount (mass parts) of the polymer dispersant to that (mass parts) of the pigment that was assumed to be 1 | | | |

(Example 303)

Fine-particle dispersions were produced using the process of Example 301, except that the molecular weight of polyvinyl pyrrolidone to be added to the 3-IA solution was changed to 360,000 (K90 (trade name), manufactured by Wako Pure Chemicals Industries Ltd.) and that to the 3-IA solution, the polyvinyl pyrrolidone was added in an amount of 1, 3, 5, or 10 parts by weight based on 1 part by weight of the pigment. The resulting fine particles were measured for median diameter (in terms of volume). The results are shown in Table 6. In all cases, a laminar flow of the solution was formed in the channel.

Table 6

| Addition amount* | 1.0 | 3.0 | 5.0 | 10.0 |
|---|---|---|---|---|
| Median diameter (nm) | 489.0 | 246.0 | 30.8 | 14.3 |
| * The ratio of the addition amount (mass parts) of the polymer dispersant to that (mass parts) of the pigment that was assumed to be 1 | | | | |

(Example 304)

At room temperature, 0.375 g of Pigment Yellow 128 (CROMOPHTAL YELLOW 8GN (trade name), manufactured by Ciba Specialty Chemicals Inc.) was dissolved into 6.675 mL of dimethylsulfoxide, 0.23 mL of 8 mol/L aqueous potassium hydroxide solution, and 0.375 g (which was 1.0 part by weight based on 1 part by weight of the pigment) of a dispersant, polyvinyl pyrrolidone (K30 (trade name) with a molecular weight of 40,000, manufactured by Wako Pure Chemicals Industries Ltd.), to form a solution (designated as 3-IB solution). The pH of the 3-IB solution was beyond the measuring limit value (pH 14).
Separately, 0.75 g of a dispersant, sodium N-oleoyl-N-methyltaurine was mixed with 90 mL of distilled water, to form a solution (designated as 3-IIB solution). The pH of the 3-IIB solution was 6.9.
These solutions were each passed through a 0.45$\mu$m-microfilter (manufactured by Fuji Photo Film Co., Ltd.), so that impurities such as dust were removed. The reactor as shown in Fig. 1-1 was used to perform a reaction by the following procedure. Two Teflon (registered trademark) tubes each with a length of 50 cm and an equivalent diameter of 1 mm were connected to the two inlets of a Y-shaped Teflon (registered trademark) connector with an equivalent diameter of 500 $\mu$m, each through a connector. Two syringes containing the 3-IB and 3-IIB solutions, respectively, were each connected to the two tubes, and the resulting unit was fitted to a pump. The outlet of the connector was connected to a Teflon (registered trademark) tube with a length of 1 m and an equivalent diameter of 500 $\mu$m. At room temperature, the 3-IB and 3-IIB solutions were fed at flow rates of 1 mL/hr and 6 mL/hr, respectively, so that a laminar flow was formed in the channel (with a Reynolds number of about 5.0), and that a dispersion of Pigment Yellow 128 was obtained, which was collected from the front end of the tube. The pH of the collected dispersion was 12.6. The particle diameter of fine particles in the resulting dispersion was measured with a dynamic light scattering particle-diameter analyzer, and the measured median diameter (in terms of volume) was 47.1 nm.

(Example 305)

Fine-particle dispersions were produced using the process of Example 304, except that to the 3-IB solution, polyvinyl pyrrolidone was added in an amount of 3 or 5 parts by weight based on 1 part by weight of the pigment The resulting fine particles were measured for median diameter (in terms of volume). The results are shown in Table 7 together with those of Example 304. In all cases, a laminar flow of the solution was formed in the channel.

Table 7

| Addition amount* | 1.0 | 3.0 | 5.0 |
|---|---|---|---|
| Median diameter (nm) | 47.1 | 28.0 | 21.6 |
| * The ratio of the addition amount (mass parts) of the polymer dispersant to that (mass parts) of the pigment that was assumed to be 1 | | | |

(Comparative Example 301)

Six mL of the 3-IIA solution as used in Example 301 was placed in a beaker. In the preparation of the 3-IA solution in Example 301, polyvinyl pyrrolidone with a molecular weight of 360,000 (K90 (trade name), manufactured by Wako Pure Chemicals Industries Ltd.) was alternatively used and added in an amount of 1, 3, 5, or 10 parts by weight based on 1 part by weight of the pigment. Under stirring with a stirrer, 1 mL of the thus-prepared solution containing polyvinyl pyrrolidone was added to the beaker at a temperature of 5°C, to form a dispersion of 2,9-dimethylquinacridone fine-particles. The particle diameter of fine-particles in each of the resulting dispersions was measured with a dynamic light scattering particle-diameter analyzer. The measured median diameter (in terms of volume) was varied in the range of about 10 to 15 nm, and no correlation was found between the particle diameter and the addition amount of polyvinyl pyrrolidone in the aforesaid modified 3-IA solution (1, 3, 5, or 10 parts by weight based on 1 part by weight of the pigment).

(Example 306)

A solution (designated as 3-IC solution) was prepared using the process of preparing the 3-IA solution of Example 301, except that only the polyvinyl pyrrolidone dispersant was not used. A dispersion was prepared and collected using the process of Example 301, except that the 3-IC solution was used in place of the 3-IA solution. The particle diameter of fine-particles in the resulting dispersion was measured with a dynamic light scattering particle-diameter analyzer, and the measured median diameter (in terms of volume) was 740 nm.

(Comparative Example 302)

A dispersion was tried to prepare and collect using the process of Example 301, except that the 3-IC solution was used in place of the 3-IA solution and that water was used in place of the 3-IIA solution. After a while, however, the channel was blocked. This result apparently means that the particle size was conspicuously increased and suggests that the reaction should be carried out in the presence of a dispersant.
From these results, it was found that according to the method of the present invention, it is possible to control the shape (particle diameter (distribution)) of fine particles, which cannot be attained with the conventional technique, and to produce fine particles of the desired particle size in a wide range.

(Example 401)

At room temperature, 0.15 g of 2,9-dimethylquinacridone (HOSTAPERM PINK E (trade name), manufactured by Clariant) was dissolved into 13.35 mL of dimetliylsulfoxide, 1.65 mL of 0.8 mol/L aqueous potassium hydroxide solution, and 0.75 g of a dispersant, polyvinyl pyrrolidone (K30 (trade name) with a molecular weight of 40,000, manufactured by Wako Pure Chemical Industries, Ltd.), to form a solution (designated as 4-IA solution). The pH of the 4-IA solution was beyond the measuring limit value (pH 14).
Separately, 0.75 g of a dispersant, sodium N-oleoyl-N-methyltaurine was mixed with 90 mL of distilled water, to form a solution (designated as 4-IIA solution). The pH of the 4-IIA solution was 6.9.
These solutions were each passed through a 0.45 μm-microfilter (manufactured by Fuji Photo Film Co., Ltd.), so that impurities such as dust were removed. The reactor as shown in Fig. 1-1 was used to perform a reaction by the following procedure. Two Teflon (registered trademark) tubes each with a length of 50 cm and an equivalent diameter of 1 mm were connected to the two inlets of a Y-shaped Teflon (registered trademark) connector with an equivalent diameter of 500 $\mu$m, each through a connector. Two syringes containing the 4-IA and 4-IIA solutions, respectively, were each connected to the two tubes, and the resulting unit was fitted to a pump. The outlet of the connector was connected to a Teflon (registered trademark) tube with a length of 1 m and an equivalent diameter of 500 $\mu$m. The Y-shaped connector was kept at 20°C by means of a thermostatic bath, and the 4-IA solution at 20°C was fed at a flow rate of 1 mL/hr, and the 4-IIA solution at 20°C was fed at a flow rate of 6 mL/hr, so that a laminar flow was formed in the channel (with a Reynolds number of about 5.0) and that a dispersion of 2,9-dimethylquinacridone was obtained, which was collected from the front end of the tube. The pH of the collected dispersion was 12.4. The particle diameter of fine particles in the resulting dispersion was measured with a dynamic light scattering particle-diameter analyzer, and the measured median diameter (in terms of volume) was 270.5 nm.

(Example 402)

Fine-particle dispersions were produced in the same manner as in Examples 401, except that the temperature of the Y-shaped connector was changed to 3°C, 11°C, 20°C, 32°C, 51°C, 60°C, 70°C, or 83°C, and the resulting fine particles were measured for median diameter (in terms of volume). The results are shown in Table 8 together with those of Example 401. From the results, it is apparent that the particle diameter of the resulting fine-particles can be controlled, by changing the temperature during the contacting and flowing.

Table 8

| Temperature (°C) | 3 | 11 | 20 | 32 | 51 | 60 | 70 | 83 |
|---|---|---|---|---|---|---|---|---|
| Median diameter (nm) | 70.6 | 149.3 | 270.5 | 330.0 | 368.0 | 370.0 | 425.0 | 480.0 |

From these results, it was found that according to the method of the present invention, it is possible to control the shape (particle diameter) of fine particles, which cannot be attained with the conventional technique, and to produce fine particles of the desired particle size in a wide range.

**Claims**

1.  A method of varying the particle size of fine-particles of an organic pigment produced when an aqueous medium in which an organic pigment is dissolved and which contains at least one dispersing agent, and a solution for adjusting the pH of the aqueous organic pigment solution, flow and contact each other in a laminar flow state in a channel (flow passage), wherein the pH of the aqueous organic pigment solution is changed in the channel flow, comprising:

    varying at least one of (b1) the molecular weight of a polymer dispersing agent comprised in the aqueous organic pigment solution, (c1) the content of the dispersing agent and (d1) the temperature in order to vary the particle size obtained.

2.  A method of varying the particle size of fine-particles of an organic pigment produced when an organic pigment solution and an aqueous medium, at least one of which containing a dispersing agent, flow and contact each other in a channel having an equivalent diameter of 1 mm or less, comprising:

    varying during the contacting and flowing at least one of (b2) the molecular weight of a polymer dispersing agent to be contained in at least one of the organic pigment solution and the aqueous medium, (c2) the content of the dispersing agent and (d2) the temperature.

3.  A method according to Claim 1, comprising varying the molecular weight of the polymer dispersing agent to be contained in the organic pigment solution in order to vary the particle size of said fine-particles of organic pigment.

4.  A method according to Claim 2, comprising varying the molecular weight of the polymer dispersing agent in order to vary the particle size of said fine-particles of organic pigment.

5.  A method according to Claim 1, comprising varying the content of the dispersing agent in order to vary the particle size of said fine-particles of organic pigment.

6. A method according to Claim 2, comprising varying the content of the dispersing agent in order to vary the particle size of said fine-particles of organic pigment.

7. A method according to Claim 6, wherein the dispersing agent is a polymer dispersing agent.

8. A method according to Claim 1, comprising varying the temperature during the contacting and flowing in order to vary the particle size of said fine-particles of organic pigment.

9. A method according to any of Claims 3, 5 and 8, wherein the solution of the organic pigment is alkaline.

10. A method according to any of Claims 3, 5, 8 and 9, wherein the aqueous solution in which the organic pigment is dissolved in a homogeneous mixed solvent of water and an organic solvent.

11. A method according to any of Claims 3, 5 and 8-10, wherein the equivalent diameter of the channel is 1 mm or less.

12. A method according to any of Claims 5 and 8-11, wherein at least one of the dispersing agents is a polymer dispersing agent.

13. A method according to any of Claims 3, 5 and 8-12, wherein the channel of the laminar flow is a micro-reaction site.

14. A method according to Claim 2, comprising varying the temperature during the contacting and flowing in order to vary the particle size of said fine-particles of organic pigment.

15. A method according to any of Claims 4, 6, 7 or 14, wherein the solution of the organic pigment is alkaline.

16. A method according to Claim 14 or Claim 15, wherein the temperature during the contacting and flowing is controlled in any one step or in a plurality of steps of the reaction.

17. A method according to Claim 1, wherein the particle size is decreased by increasing the molecular weight of the dispersant within the range of 1,000 to 2,000,000.

18. A method according to Claim 1, wherein the particle size is decreased by increasing the mass of dispersant in the organic pigment solution within the range of 0.1 to 1,000 parts by mass based upon 100 parts by mass of organic pigment.

19. A method according to Claim 1, wherein the particle size is decreased by decreasing the temperature at which the solutions are contacted with the range of -20 °C to 90 °C.


**Patentansprüche**

1. Verfahren zum Variieren der Teilchengrösse von Feinpartikeln eines organischen Pigments, das hergestellt wird, wenn ein wässriges Medium, in dem ein organisches Pigment aufgelöst ist und das mindestens ein Dispergiermittel enthält, und eine Lösung zum Einstellen des pH-Werts der wässrigen organischen Pigmentlösung fliessen und in einem laminaren Strömungszustand in einem Kanal (Strömungsdurchgang) miteinander in Kontakt kommen, wobei sich der pH-Wert der wässrigen organischen Pigmentlösung im Fluss durch den Kanal ändert, umfassend:

   Variieren von mindestens einem von (b1) dem Molekulargewicht eines polymeren Dispergiermittels, das in der wässrigen Lösung des organischen Pigments enthalten ist, (c1) dem Gehalt des Dispergiermittels und (d1) der Temperatur, um die erhaltene Teilchengrösse zu variieren.

2. Verfahren zum Variieren der Teilchengrösse von Feinpartikeln eines organischen Pigments, das hergestellt wird, wenn eine Lösung eines organischen Pigments und ein wässriges Medium, von denen mindestens eines ein Dispergiermittel enthält, fliessen und in einem Kanal mit einem Äquivalenzdurchmesser von 1 mm oder weniger miteinander in Kontakt kommen, umfassend:

   Variieren von mindestens einem von (b2) dem Molekulargewicht eines polymeren Dispergiermittels, das in mindestens einem von der Lösung des organischen Pigments und dem wässrigen Medium enthalten ist, (c2) dem Gehalt des Dispergiermittels und (d2) der Temperatur, während des Kontaktierens und Fliessens.

3. Verfahren gemäss Anspruch 1, umfassend das Variieren des Molekulargewichts des polymeren Dispergiermittels, das in der Lösung des organischen Pigments enthalten ist, um die Teilchengrösse der Feinpartikel des organischen Pigments zu variieren.

4. Verfahren gemäss Anspruch 2, umfassend das Variieren des Molekulargewichts des polymeren Dispergiermittels, um die Teilchengrösse der Feinpartikel des organischen Pigments zu variieren.

5. Verfahren gemäss Anspruch 1, umfassend das Variieren des Gehalts an Dispergiermittel, um die Teilchengrösse der Feinpartikel des organischen Pigments zu variieren.

6. Verfahren gemäss Anspruch 2, umfassend das Variieren des Gehalts an Dispergiermittel, um die Teilchengrösse der Feinpartikel des organischen Pigments zu variieren.

7. Verfahren gemäss Anspruch 6, wobei das Dispergiermittel ein polymeres Dispergiermittel ist.

8. Verfahren gemäss Anspruch 1, umfassend das Variieren der Temperatur während des Kontaktieren und Fliessens, um die Teilchengrösse der Feinpartikel des organischen Pigments zu variieren.

9. Verfahren gemäss irgendeinem der Ansprüche 3, 5 und 8, wobei die Lösung des organischen Pigments alkalisch ist.

10. Verfahren gemäss irgendeinem der Ansprüche 3, 5, 8 und 9, wobei die wässrige Lösung, in der das organische Pigment aufgelöst ist, ein homogen gemischtes Lösungsmittel aus Wasser und einem organischen Lösungsmittel ist.

11. Verfahren gemäss irgendeinem der Ansprüche 3, 5 und 8 bis 10, wobei der Äquivalenzdurchmesser des Kanals 1 mm oder weniger ist.

12. Verfahren gemäss irgendeinem der Ansprüche 5 und 8 bis 11, wobei mindestens eines der Dispergiermittel ein polymeres Dispergiermittel ist.

13. Verfahren gemäss irgendeinem der Ansprüche 3, 5 und 8 bis 12, wobei der laminare Strömungskanal eine Mikro-Reaktionsanlage ist.

14. Verfahren gemäss Anspruch 2, umfassend das Variieren der Temperatur während des Kontaktierens und Fliessens, um die Teilchengrösse der Feinpartikel des organischen Pigments zu variieren.

15. Verfahren gemäss irgendeinem der Ansprüche 4, 6, 7 oder 14, wobei die Lösung des organischen Pigments alkalisch ist.

16. Verfahren gemäss Anspruch 14 oder Anspruch 15, wobei die Temperatur während des Kontaktierens und Fliessens in irgendeiner oder einer Vielzahl der Reaktionsstufen gesteuert wird.

17. Verfahren gemäss Anspruch 1, wobei die Teilchengrösse durch Erhöhen des Molekulargewichts des Dispergiermittels auf einen Bereich innerhalb von 1.000 bis 2.000.000 verringert wird.

18. Verfahren gemäss Anspruch 1, wobei die Partikelgrösse durch Erhöhen der Masse des Dispergiermittels in der Lösung des organischen Pigments auf einen Bereich innerhalb von 0,1 bis 1.000 Masse-Teilen auf Basis von 100 Masse-Teilen des organischen Pigments verringert wird.

19. Verfahren gemäss Anspruch 1, wobei die Teilchengrösse durch Verringern der Temperatur, bei der die Lösungen in Kontakt kommen, auf innerhalb des Bereichs von -20 bis 90°C verringert wird.

**Revendications**

1. Procédé permettant de varier la dimension des particules fines d'un pigment organique produit lorsqu'un milieu aqueux dans lequel un pigment organique est dissous et qui contient au moins un agent de dispersion, et une solution pour régler le pH de la solution aqueuse de pigment organique, s'écoulent et se mettent en contact l'un (e) avec l'autre dans un état d'écoulement laminaire dans un canal (passage d'écoulement), où le pH de la solution aqueuse de pigment organique est modifié dans l'écoulement de canal, comprenant le fait :

de varier au moins l'un(e) (b1) du poids moléculaire d'un agent de dispersion de polymères compris dans la solution aqueuse de pigment organique, (c1) de la teneur en agent de dispersion et (d1) de la température afin de varier la dimension des particules obtenue.

2. Procédé permettant de varier la dimension des particules fines d'un pigment organique produit lorsqu'une solution de pigment organique et un milieu aqueux, au moins l'un des deux contenant un agent de dispersion, s'écoulent et se mettent en contact l'un(e) avec l'autre dans un canal ayant un diamètre équivalent de 1 mm ou moins, comprenant le fait :

de varier, pendant la mise en contact et l'écoulement, au moins l'un (b2) du poids moléculaire d'un agent de dispersion de polymères devant être contenu dans au moins l'un (e) de la solution de pigment organique et du milieu aqueux, (c2) de la teneur en agent de dispersion et (d2) de la température.

3. Procédé selon la revendication 1, comprenant le fait de varier le poids moléculaire de l'agent de dispersion de polymères devant être contenu dans la solution de pigment organique afin de varier la dimension desdites particules fines de pigment organique.

4. Procédé selon la revendication 2, comprenant le fait de varier le poids moléculaire de l'agent de dispersion de polymères afin de varier la dimension desdites particules fines de pigment organique.

5. Procédé selon la revendication 1, comprenant le fait de varier la teneur en agent de dispersion afin de varier la dimension desdites particules fines de pigment organique.

6. Procédé selon la revendication 2, comprenant le fait de varier la teneur en agent de dispersion afin de varier la dimension desdites particules fines de pigment organique.

7. Procédé selon la revendication 6, dans lequel l'agent de dispersion est un agent de dispersion de polymères.

8. Procédé selon la revendication 1, comprenant le fait de varier la température pendant la mise en contact et l'écoulement afin de varier la dimension desdites particules fines de pigment organique.

9. Procédé selon l'une des revendications 3, 5 et 8, dans lequel la solution du pigment organique est l'alcalin.

10. Procédé selon l'une des revendications 3, 5, 8 et 9, dans lequel la solution aqueuse dans laquelle le pigment organique est dissous dans un solvant mixte homogène d'eau et un solvant organique.

11. Procédé selon l'une des revendications 3, 5 et 8-10, dans lequel le diamètre équivalent du canal est de 1 mm ou moins.

12. Procédé selon l'une des revendications 5 et 8-11, dans lequel au moins l'un des agents de dispersion est un agent de dispersion de polymères.

13. Procédé selon l'une des revendications 3, 5 et 8-12, dans lequel le canal de l'écoulement laminaire est un site de micro-réaction.

14. Procédé selon la revendication 2, comprenant le fait de varier la température pendant la mise en contact et l'écoulement afin de varier la dimension desdites particules fines de pigment organique.

15. Procédé selon l'une des revendications 4, 6, 7 ou 14, dans lequel la solution du pigment organique est l'alcalin.

16. Procédé selon la revendication 14 ou 15, dans lequel la température pendant la mise en contact et l'écoulement est régulée à chaque une étape ou à une pluralité d'étapes de la réaction.

17. Procédé selon la revendication 1, dans lequel la dimension des particules est diminuée en augmentant le poids moléculaire du dispersant dans la plage de 1000 à 2000000.

**18.** Procédé selon la revendication 1, dans lequel la dimension des particules est diminuée en augmentant la masse de dispersant dans la solution de pigment organique dans la plage de 0,1 à 1000 parties en masse sur la base de 100 parties en masse de pigment organique.

**19.** Procédé selon la revendication 1, dans lequel la dimension des particules est diminuée en diminuant la température à laquelle les solutions sont mises en contact avec la plage de -20 °C à 90 °C.

# F i g. 1-1

# F i g. 1-2

# F i g . 2-1

# F i g . 2-2

# F i g . 2-3

# F i g. 3-1

30

31 Channel width I    Channel width L  34

33a    Channel width K    33f

33d    33c    33e

Channel width J    34

32    III

33b    Channel length Q    33g

35

Channel width M

III

# F i g. 3-2

32    33    34    30

Channel depth S

# F i g . 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002138216 A
- JP 2002146222 A
- JP 2002155221 A
- JP 2002161218 A
- JP 2003026972 A
- JP 2004091560 A
- JP 2002030230 A
- JP 2002038043 A

- JP 2002012788 A
- EP 1516896 A
- JP 2003210960 A
- JP 2003210963 A
- JP 2003210959 A
- JP 3273067 A
- JP 2002194263 A

**Non-patent literature cited in the description**

- Dispersion Stabilization of Pigment and Surface Treatment Technique/Evaluation. Technical Information Institute Co., Ltd, 2001, 123-224
- Experimental Chemical Lecture. Maruzen Co., Ltd, 1993, vol. 12, 411-488
- **W. HERBST ; K. HUNGER.** Industrial Organic Pigments, Production, Properties, Applications. VCH A Wiley Company, 1997, 595-630

- Kikai Kougaku Jiten. Maruzen, K. K, 1997
- **W. EHRFELD ; V HESSEL ; H. LOEWE.** Microreactor. Wiley-VCH, 2000
- Dispersion Stabilization of Pigment and Surface Treatment Technique/Evaluation. Japan Association for International Chemical Information, December 2001, 29-46